(19) Europäisches Patentamt / European Patent Office / Office européen des brevets

(11) **EP 4 307 010 A1**

(12) **DEMANDE DE BREVET EUROPEEN**

(43) Date de publication:
**17.01.2024 Bulletin 2024/03**

(21) Numéro de dépôt: **23185105.6**

(22) Date de dépôt: **12.07.2023**

(51) Classification Internationale des Brevets (IPC):
**G01S 19/20** (2010.01)    **G01S 19/42** (2010.01)
**G01S 19/50** (2010.01)

(52) Classification Coopérative des Brevets (CPC):
**G01S 19/20; G01S 19/42; G01S 19/50**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **06.09.2022 FR 2208888**
**12.07.2022 FR 2207132**

(71) Demandeur: **GTS France SAS**
**78140 Velizy-Villacoublay (FR)**

(72) Inventeur: **REVOL, Marc**
**26120 UPIE (FR)**

(74) Mandataire: **Atout PI Laplace**
**Immeuble "Visium"**
**22, avenue Aristide Briand**
**94117 Arcueil Cedex (FR)**

(54) **METHODE MAC DE MONITORING, AVEC COMPENSATION DE BIAIS COMMUN, DE L'INTEGRITE D'UN PROCEDE DE POSITIONNEMENT PONCTUEL PAR BALISES VIRTUELLES**

(57)     Procédé de contrôle de l'intégrité de la localisation obtenue par détermination de la position au plus près, basée sur le filtrage adapté des signaux GNSS reçus, d'un ensemble de positions de références géoréférencées pour mise en oeuvre sur porteur mobile ou fixe, le dit procédé permettant de vérifier que la fonction de corrélation des signaux GNSS reçus est cohérente de la position de référence sélectionnée.

Le procédé de contrôle de l'intégrité de la localisation au plus proche selon l'invention comporte :

1) Une première étape de sélection préalable des signaux satellites aptes à participer au test de contrôle de l'intégrité de la position, sur un critère de niveau minimum de rapport signal à bruit de la voie dite ponctuelle,

2) Une seconde étape d'exclusion des signaux satellites non compatibles avec des phases de codes prédites, réalisée sur un critère d'absence d'un Maximum Au Centre (MAC) des points de corrélation avance-ponctuel-retard et répondant aux impératifs de risques de non-intégrité, non-continuité et de délais d'alarme requis pour la sécurité du système de positionnement,

3) Au moins une étape de recherche du maximum de vraisemblance sur l'ensemble des positions de référence obtenu par cumul des puissances élémentaires des différents satellites sélectionnés.

[Fig.3]

EP 4 307 010 A1

**Description**

**Résumé de l'invention**

L'invention décrit un procédé de contrôle de l'intégrité associé à la méthode de localisation par détermination de la position au plus près d'un ensemble de positions de références prédéfinies, dite détermination de la position à l'affût, pour mise en oeuvre sur porteur mobile ou fixe, le dit procédé permettant de vérifier que la fonction de corrélation des signaux GNSS reçus est cohérente de la position de référence sélectionnée, conformément à un rayon de protection et un risque de perte d'intégrité requis pour la sécurité du système de positionnement.

L'efficacité de ce contrôle de l'intégrité de la position est déterminée par son rayon de protection qui représente sa capacité à détecter des défauts susceptibles d'entrainer des erreurs de position au minimum égales à ce rayon, pour les risques de non-détection et de fausse alarme et les délais d'alarme requis.

L'avantage de tester l'adéquation d'une position hypothétique avec la fonction de corrélation des signaux reçus est de permettre pour chacun de vérifier s'il se trouve ou non au voisinage d'un maximum de la fonction de corrélation spatiale.

Ce test de contrôle de l'intégrité proposé, dit du « Maximum Au Centre » (désigné par l'acronyme MAC dans cette invention), s'applique plus particulièrement, mais pas exclusivement, dans le cadre d'une méthode de positionnement ponctuel, telle que décrite dans le brevet EP3306272A1 [D1] (« Procédé de localisation ponctuelle d'un véhicule évoluant sur une trajectoire contrainte et système associé »), puisque le contrôle de l'intégrité met en oeuvre les mêmes grandeurs (puissance en sortie de filtrage adapté pour des positions de référence connues) que celles utilisées par l'algorithme de positionnement du récepteur GNSS par rapport à un ensemble de points de référence géolocalisés.

Il permet aussi, dans le cadre de la mise en oeuvre de cette méthode de positionnement, de simplifier grandement la charge de calcul de la recherche de la meilleure hypothèse de positionnement, le nombre de positions de balises candidates résiduelles éloignées de la position réelle devenant très faible et les satellites sélectionnés plus discriminants.

Le domaine de recherche du maximum participe à définir le rayon de protection, et influe aussi directement sur la disponibilité de la méthode (plus il sera choisi petit et moins nombreux seront les satellites retenus), sur la quantité de fausses alarmes générées ainsi que sur la confiance associée à la détection de défauts sur les signaux reçus.

L'application de ce contrôle de l'intégrité n'est cependant pas limitée à la mise en œuvre de la méthode de positionnement ponctuel de type « détermination de la position à l'affût », mais peut être aussi utilisée pour contrôler, via les signaux GNSS, la confiance d'une information de position délivrée par tout autre moyen.

L'invention décrit aussi l'algorithme établissant la relation entre le rayon de protection ainsi défini et les risques de perte de continuité et de perte d'intégrité encourus par la méthode de contrôle de l'intégrité, mis en oeuvre pour le calcul du rayon de protection de la surveillance.

**Domaine de l'invention**

Le domaine d'application de l'invention concerne principalement, mais pas uniquement, les systèmes de positionnement des trains dans le contexte ferroviaire, et notamment la définition de balises virtuelles fonctionnant sur la base d'une localisation GNSS, en vue d'émuler une fonction et des interfaces équivalentes aux Eurobalises, recommandées par les standards actuels. L'invention s'applique aussi de la même façon à la localisation de toute plateforme mobile se déplaçant sur une trajectoire contrainte, physique ou virtuelle, tel que cela est le cas dans le domaine maritime ou fluvial pour les bateaux évoluant dans des chenaux de navigation ou des canaux, dans le domaine automobile au passage de péages ou plus généralement pour les véhicules se déplaçant sur une voie géoréférencée, dans le domaine aéronautique, pour des drones devant se déplacer dans des couloirs réglementés, ou encore pour l'assistance aux personnes devant évoluer dans un espace confiné.

La méthode de localisation par « détection à l'affût » trouve son origine dans la recherche de solutions de positionnement alternatives, permettant de remplacer la détection de passage des trains, basée sur des balises RFID fixes placées au sol, représentant un coût important d'installation et de maintien d'infrastructures, par un système de localisation embarqué, réalisant un positionnement autonome à bord, sans autres infrastructures latérales.

Les systèmes de positionnement GNSS offrent en effet une capacité de localisation bord autonome, « n'importe_où et n'importe_quand » », alternative à l'utilisation de balises physiques au sol.

Ainsi les solutions de balises de référence virtuelles envisagées passent par l'utilisation à bord du train d'un système de localisation permanent et continu, permettant de déclencher un top de position équivalent à celui d'une Eurobalise, lorsque la position fournie par le système de localisation passe au plus près de la position de la balise fictive.

Cependant, l'utilisation autonome des signaux GNSS selon une approche standard présente des limitations connues :

- La disponibilité des signaux GNSS peut ne pas être suffisante dans le cas de mobiles évoluant au sol, pour des raisons de masquage des signaux, ou de défaillance des satellites

- La qualité des mesures peut être dégradée par l'effet de perturbations de propagation ou d'interférences locales dans l'environnement de réception

- La précision et l'intégrité des mesures de localisation peuvent être sensiblement moins bonnes que celles atteintes par une balise physique robuste, et ne permet pas d'atteindre les objectifs de sécurité attendus pour la circulation ferroviaire, définis par les SIL (« Safety Integrity Level ») applicables aux applications ferroviaires.

Le rayon de protection typique d'un positionnement GNSS variant entre 10m à 60m selon les augmentations (ou non) considérées, du type DGPS ou SBAS, il est difficile de respecter les objectifs de garantie d'intégrité de la position calculée, plutôt préconisée inférieure à 5m, avec un algorithme de localisation standard (PVT).

La présente invention s'inscrit dans une approche de localisation par détection de position à l'affût, permettant d'améliorer la robustesse et la disponibilité de la localisation réalisée sur la base de signaux GNSS, pour laquelle le filtrage adapté est réalisée par corrélation des signaux attendus selon le domaine spatial correspondant au déplacement du mobile et non plus par exploration des retards dans le domaine temporel.

Cette technique de Corrélation Spatiale Généralisée, dite aussi de « détection à l'affût », permet de réduire le domaine d'incertitude pour la recherche du signal adapté et peut profiter du déplacement du porteur pour gérer le glissement relatif du code local attendu et du signal reçu. La phase de code du signal local est ajustée, à la date courante, pour la position de référence attendue de passage du mobile, alors que la phase du signal reçue évolue naturellement avec le déplacement du mobile selon une position liée à la trajectoire.

La technique de positionnement par Corrélation Spatiale Généralisée, déclinée dans des brevets [D1] (FR 160 14 49, « Procédé de localisation ponctuelle d'un véhicule évoluant sur une trajectoire contrainte et système associé ») et [D2] (EP3751315, ( « Procédé et système de localisation ponctuelle d'un véhicule à l'arrêt sur une voie de garage à l'aide de balises virtuelles »), est désignée dans ce mémoire par l'acronyme « CSG ».

La présente invention complète ainsi les inventions [D1] et [D2] en leur associant un dispositif de contrôle de l'intégrité des solutions de localisation fournies, afin de détecter d'éventuelles anomalies, des erreurs de positionnement ou des défaillances des signaux reçus, et d'évaluer en continu un rayon de protection de la solution fournie avec un niveau de confiance compatible des exigences de sureté de la navigation.

**Problème technique**

Dans le cas de la méthode CSG, le filtrage adapté est réalisé selon les retards et les dopplers (dits « phases de codes et de porteuse »), par corrélation des signaux GNSS reçus avec les signaux attendus pour les positions attendues.

Le code du signal local est à phase fixe à l'émission sur le satellite. La phase de réception prédite du signal est ajustée en fonction du mouvement du satellite (dont la trajectoire est calculée selon les éphémérides) et pour les différentes hypothèses de positions et de dates de réception (la base de temps du récepteur étant supposée synchronisée préalablement par un calcul classique de PVT à une centaine de nanosecondes près). La phase du signal reçu effectivement par le récepteur évolue de son côté naturellement avec le temps et selon la position attendue. Il existe une parfaite adaptation et maximisation de la vraisemblance lorsque la phase du signal reçu correspond à la phase des signaux attendus pour la position de référence attendue.

Une telle cohérence entre signaux réels reçus et signaux attendus aux différentes positions attendues ne peut pas bien sûr être parfaitement assurée, ne serait-ce qu'en raison :

- De l'erreur de synchronisation du temps local du récepteur sur le temps GNSS, qui comporte une imprécision d'estimation, voire une instabilité dans le temps,

- Des erreurs système et de propagations qui ne sont pas parfaitement corrigées par les modèles (ionosphérique, troposphérique, bras de levier d'antenne, erreur d'éphémérides et de synchro de temps satellites, ...)

- Les positions attendues sont entachées d'erreur (garage du train au mètre près)

- Le géoréférencement des positions attendues est lui-même entaché d'erreur

Les fonctions de corrélations des différents satellites ne sont donc pas toutes centrées exactement autour du même maximum de puissance, les écarts de synchronisation entre signaux satellites reçus _qui trouvent leurs sources dans les erreurs d'horloge satellites, les retards de propagation ionosphérique et troposphérique, les trajets multiples_ entraînant des décalages de la fonction de corrélation spatiale.

L'approche CSG, bien qu'offrant une solution plus robuste que les solutions classiques de mise en oeuvre des signaux GNSS au travers d'un PVT, souffre comme les autres solutions du niveau faible des signaux en réception et de la déformation des fonctions de corrélation obtenues après filtrage adapté en présence d'interférences et de trajets multiples.

D'autre part, la transformation d'un retard de propagation en une position sur une trajectoire contrainte n'est pas toujours univoque, car dépendant de l'angle entre la direction de déplacement du mobile et la direction d'incidence du signal. Les ambiguïtés spatiales, liées à la répartition géométrique des sources, dépendent aussi des puissances relatives des signaux, un signal ambigu significativement plus puissant que les autres pouvant entraîner avec lui toute la résolution. Bien que le nombre de sources de signaux soit en général suffisant pour introduire une diversité d'angles d'arrivée qui rend rares de telles situations d'ambiguïté de résolution, il est nécessaire de limiter leur occurrence et de pouvoir en surveiller le risque d'apparition dans le cas des applications de navigation critiques qui nécessitent un niveau élevé de disponibilité et d'intégrité des solutions de localisation.

La présente invention propose une solution de contrôle de l'intégrité de la position fournie suivant l'approche CSG. Cette solution met à profit la capacité, offerte par la méthode de localisation à l'affût, de tester l'adéquation d'une position hypothétique, mais définie précisément, en utilisant la fonction de corrélation observée des signaux reçus, permettant ainsi pour chacun des signaux reçus de tester s'il se trouve ou non au voisinage d'un maximum de corrélation.

## Etat de la technique antérieure

Le brevet [D1] décrit une réalisation particulière de détection de passage, par filtrage adapté du signal reçu avec une ensemble de signaux de référence attendus (dits codes locaux), dont les phases de codes et de porteuse, sont prédits pour une position de réception de référence connue, à partir des retards de propagation et des dopplers des signaux directs à recevoir en ce point, calculés sur la base des positions et des vitesses connues des émetteurs.

Il est nécessaire, pour réaliser la prédiction des phases de code, de corriger (lors de la génération des codes locaux) les distances attendues des satellites à l'aide des modèles d'erreur disponibles, fournis par ailleurs par un récepteur GNSS embarqué ou via une liaison d'assistance (fournissant les modèles d'erreur d'horloge, modèles d'erreur troposphérique & ionosphérique), pour les réduire à quelques mètres (hors trajet multiples et interférence).

Pour couvrir l'imprécision sur la synchronisation locale, plusieurs filtrages adaptés sont menés en parallèle, correspondant aux signaux à recevoir aux différentes positions attendues possibles du train, calculés pour différentes hypothèses de recalage du temps local en vue de couvrir le domaine d'incertitude en temps.

La position et la date de recalage pour laquelle la corrélation est maximale sont alors considérées comme la position et la correction de synchronisation les plus probables pour le train.

Le brevet EP3751315 [D2] propose une adaptation du brevet précédent consistant à étendre le principe de la balise de référence virtuelle au cas des trains à l'arrêt, afin de pouvoir identifier automatiquement la voie de départ du train après sa mise en route, et cela sans mouvement du porteur, problématique qui ne peut être traitée par le brevet susmentionné, ni de façon fiable par les récepteurs de localisation GNSS standards.

Il décrit une solution pour comparer la vraisemblance de plusieurs hypothèses de localisation au démarrage du train correspondant à des positions de stationnement prédéterminées et connues, en vérifiant la cohérence des signaux GNSS reçus avec les signaux GNSS attendus pour ces différentes positions.

Le traitement proposé dans le brevet consiste à réaliser une corrélation (complexe) globale entre le signal reçu sur l'antenne bord et l'ensemble des codes locaux des satellites visibles, synchronisés sur les phases (du code et de la porteuse) attendues des signaux satellites à l'instant courant et, pour chacune des hypothèses des positions attendues connues possibles.

La position retenue est celle qui permet de maximiser le rapport signal à bruit obtenu, pour l'ensemble des hypothèses de positions de référence attendue, après sommation cohérente ou non cohérente des sorties de corrélations obtenues pour l'ensemble des satellites traités.

Ici, les positions de réception possibles sont données par une grille serrée de positions sur les rails qui constituent l'ensemble des hypothèses de positions de redémarrage du train, pour être évaluées en parallèle et non plus successivement dans le temps comme cela est le cas dans le brevet [D1].

Cependant, la présence toujours possible de déformations du signal reçu, liées à des trajets multiples, ou à des interférences locales, peut induire des erreurs de position bien supérieures à l'espacement entre voies, risquant ainsi de rendre la détermination de la voie non intègre, même après une intégration longue de la position calculée.

Ces erreurs de l'ordre de plusieurs dizaines de nanosecondes (disons 200ns, soit 60m sur les pseudodistances), se traduisent par un possible étalement des positions des maxima de corrélation entre satellites, avec un risque que l'utilisateur ne soit pas alerté.

Un rayon de protection associé à une barrière de détection de défaut est ainsi défini par la capacité d'un contrôle de l'intégrité à détecter des défauts susceptibles d'entrainer des erreurs de position au minimum égales à ce rayon.

Afin d'assurer l'intégrité de la solution fournie par la méthode, un superviseur (moniteur de l'intégrité de la position) est associé au procédé de positionnement, permettant le lever l'alarme en cas d'erreur pour un rayon de protection et pour un risque fixé par les impératifs de sécurité du système.

**Limitations**

Dans la pratique, la cohérence entre les signaux réels GNSS reçus par le récepteur GNSS au temps t courant et les signaux de répliques attendus, prédits et calculés, aux différentes positions P(i) de référence, i variant de 1 à $N_{Be}$, ne peut pas être parfaitement assurée, en raison :

- De l'erreur de synchronisation du temps local du récepteur GNSS sur le temps du système GNSS qui comporte une imprécision d'estimation, voire une instabilité au cours du temps, causée par l'imprécision intrinsèque de la base de temps local du récepteur GNSS (par exemple un quartz oscillant compensé en température), plus élevée que l'imprécision de la base de temps du système GNSS (en général une horloge atomique conforme aux contraintes de vol spatial) ;

- Des erreurs propres au système GNSS et des erreurs de propagation des signaux radioélectriques qui ne sont pas parfaitement corrigées par les divers modèles de compensation, comme par exemple les erreurs de propagations ionosphérique et/ou troposphérique, les effets de bras de levier d'antenne, les erreurs d'éphémérides et de synchronisation temporelle entre les satellites.

Les décalages des maximas de la fonction de corrélation des signaux satellites autour de la position réelle, qui dépend des directions d'arrivée des signaux, créent un halo de diffusion susceptible d'entrainer une ambiguïté de résolution de la position du maximum une fois les fonctions de corrélation sommées, sans qu'il ne soit possible d'apprécier l'amplitude de l'erreur ainsi obtenue.

Dans le cas d'un récepteur en mouvement, la fonction de corrélation est explorée automatiquement au cours du déplacement du porteur. Il n'y a détection d'un passage à proximité de la balise de référence virtuelle que si la fonction de corrélation multi-satellites présente un maximum suffisamment important établi à partir d'un seuil sur le rapport signal à bruit à convenir à partir de la confiance souhaitée.

Si un maximum de corrélation multi-satellites est effectivement détecté, on pourrait à l'instar d'un RAIM estimer une incertitude sur la position de ce maximum à partir de la distribution des positions des maxima des fonctions de corrélations élémentaires des satellites autour du maximum multi-satellites, à la manière de la distribution des erreurs de pseudodistance, puis calculer un rayon de protection fonction de la distribution des erreurs et des probabilités de fausses alarmes ou de non détection d'une (ou plusieurs) anomalie de ces erreurs pour identifier l'existence d'un biais significatif.

Mais, l'accumulation de telles marges conduit à des rayons de protection qui apparaissent souvent nettement plus grands que l'imprécision visible à court terme.

D'où, la nécessité de mettre en place un contrôle d'intégrité dédié pour la méthode de détermination de la position à l'affût, qui soit basé sur une surveillance de l'erreur de décalage des maxima de corrélation, indicateur de l'amplitude de l'erreur de position possible.

**Solution au problème**

L'algorithme de contrôle de l'intégrité objet de la présente invention réalise une détection et exclusion des signaux de référence qui, s'ils étaient pris en compte, seraient susceptibles de biaiser l'estimation de position au-delà d'un seuil d'erreur toléré, et permet d'associer un rayon de protection de l'erreur de position attendue liée à cette exclusion.

Le principe du contrôle de l'intégrité de la détermination de position au plus près d'un ensemble de positions de références prédéfinies consiste à ne retenir, pour chaque position testée (dite « hypothèse de position » ou encore « position de balise de référence virtuelle ») que les satellites dont la fonction de corrélation présente un maximum au voisinage de l'hypothèse de position considérée.

Il est rappelé que le principe d'une telle détermination de position par maximum de vraisemblance, conformément à l'approche CSG mis en oeuvre par [D1] et [D2], consiste à accumuler, pour chacune des hypothèses de positions de référence testées, les puissances issues des filtrages adaptés entre le signal reçu et les signaux attendus pour chacun des satellites visibles pour ces positions.

Ce principe revient à accumuler pour chacune de ces positions les fonctions de corrélation, en principe callées au voisinage proche de leur maximum, mais avec une dispersion des retards tributaires des imperfections standards de modèles de correction de propagation, des erreurs de synchronisation au niveau des satellites et du récepteur et au bruit thermique.

A cela s'ajoute tous types de biais, non modélisés par nature, affectant la fonction de corrélation du signal reçu, tels que des sources d'interférences, des trajets multiples, des biais communs affectant le récepteur, comme les biais de la base de temps ou des biais RF.

Le réglage du contrôle d'intégrité consiste alors à définir les seuils des barrières de détection de ces biais de sorte à les exclure le plus sûrement possible de la résolution de la position, tout en restant compatible de la distribution des erreurs standards.

Il faut aussi souligner que la détermination de la position la plus probable parmi un ensemble de positions attendues, réalisée par recherche du maximum de vraisemblance, est basée sur le simple cumul des sorties de corrélations sur l'ensemble des signaux qui ne dépend pas de la direction d'incidence des signaux et en cela reste une approche purement énergétique.

Cette approche préserve ainsi (en absence de biais) la linéarité de la détermination de position vis-à-vis de la distribution des erreurs standards de retards, la position en retard du maximum obtenu après cumul des fonctions de corrélation individuelles des signaux correspondant à la moyenne (pondérée par les puissances individuelles des signaux) des erreurs de retard individuelles, et la variance de l'erreur de retard du maximum cumulé résultant de la moyenne quadratique pondérée des erreurs individuelles.

Une telle linéarité directe par rapport à la distribution des erreurs individuelles n'est pas assurée dans le cas d'une résolution de position par PVT qui nécessite une transformation spatiale entre la distribution des erreurs de retard individuel et les erreurs de positions résultantes, pouvant conduire à une élongation importante de l'espace d'incertitude pour certaines configurations géométriques des angles d'arrivée des signaux (mesurée par la dilution de précision, dite DOP).

Ainsi, le contrôle d'intégrité de la détermination de position à l'affût est basé sur un simple contrôle de la dispersion des retards de corrélation et non pas de leur projection dans un repère spatial, et, à ce titre est applicable sur la fonction de corrélation temporelle des signaux reçus.

## Avantages apportés

Le principal avantage de tester l'adéquation d'une position hypothétique connue est de permettre d'évaluer par maximum de corrélation, si le mobile se trouve ou non au voisinage d'une des références possibles de position, dont l'une est connue pour être située à proximité du récepteur. Un tel test de confirmation n'est pas possible dans le cas d'un traitement GNSS classique puisque la position calculée par PVT, utilisée comme référence par le RAIM, est elle-même imprécise et peut être biaisée par un axe à vue erroné.

Un autre avantage est lié à la robustesse accrue du principe de surveillance, basé uniquement sur une analyse du niveau et de la forme de la fonction de code d'étalement, par rapport à l'approche classiquement mise en oeuvre par les récepteurs GNSS, basée sur l'extraction d'un retard à partir de la fonction de corrélation, par mise en oeuvre de discriminateurs ou d'interpolateur en temps.

En effet, une fois constaté que, pour les situations de réception en environnement local faiblement perturbé_définies par des trajets multiples spéculaires faiblement retardés (de retard inférieur à la durée de chip du code d'étalement) et de puissance inférieure au trajet direct, ou à des interférences à bande étroite, dont le niveau après étalement de la convolution par le code local est inférieur au niveau du direct_, la position en retard du maximum de corrélation reste inchangée (non biaisée) alors que s'opèrent des déformations de la forme de la fonction de corrélation de code traduites par des dissymétries, il en découle que l'approche de détermination de la position par maximum de vraisemblance par cumul des fonctions de corrélation, mis en oeuvre pour un positionnement par CSG, est moins sensible à ces perturbations locales en réception que les approches basées sur l'extraction de retard telle que le PVT.

Pour la même raison, il en découle qu'un dispositif de contrôle de l'intégrité réalisant une surveillance de l'existence de biais de retard est plus efficace en prenant en compte uniquement la forme de la fonction de corrélation, tel que le critère de maximum au centre, qui reste efficace et sensible en présence de tels trajets multiples ou interférences, contrairement aux tests utilisant des résidus de mesures extraites de retards du type RAIM, et donc que le rayon de protection du test de type MAC est plus petit dans un environnement de réception terrestre, offrant ainsi une meilleur résolution et disponibilité au positionnement par CSG..

Le contrôle d'intégrité appliqué directement au niveau de la forme de la fonction de corrélation permet ainsi de réduire l'accumulation des marges de protection, liées aux contributions d'erreurs et biais des mesures de retard, propres à l'environnement de réception local.

La mise en oeuvre de la barrière de contrôle d'intégrité en parallèle de la recherche du maximum de vraisemblance par CSG permet de réduire le nombre d'hypothèses de positions candidates, en ne conservant que les positions possiblement ambiguës qui, évoluant avec les déplacements, pourront être facilement éliminées par filtrage temporel.

L'algorithme de contrôle d'intégrité ainsi défini s'applique de la même façon dans le cas de plateformes fixes et de plateformes mobiles.

**Brève description des figures**

L'invention sera mieux comprise à la lecture de la description de plusieurs formes de réalisation qui va suivre, donnée à titre d'exemple et faite en se référant aux dessins sur lesquels :

[Fig.1] présente le mode de réalisation le plus général de la méthode de contrôle de l'intégrité, avec compensation de biais commun, de l'intégrité d'un procédé de positionnement ponctuel par balises virtuelles
[Fig.2] illustre l'équivalence entre la fonction de corrélation temporelle et spatiale (avec et sans biais temporel)
[Fig.3] illustre le principe de détection des biais par maximum au centre (avec et sans biais temporel)
[Fig.4] illustre le principe d'apparition du risque de fausses alarmes lié à la méthode MAC
[Fig.5] illustre le principe d'apparition du risque de non-détection lié à la méthode MAC
[Fig.6] décrit le principe d'ajustement du rayon de protection de la méthode MAC selon les risques de fausses alarmes et de probabilité de détection.
[Fig.7] décrit un synoptique général de réalisation du contrôle de l'intégrité MAC
[Fig.8] décrit le procédé d'estimation et correction du biais commun de temps
[Fig.9] décrit le procédé d'estimation du rapport signal à bruit
[Fig.10] décrit un mode de réalisation particulier, mais non limitatif, du contrôle de l'intégrité MAC dans le cas d'une détection de position pour le rail

**Solution technique**

La présente invention décrit un procédé de surveillance et de calcul du rayon de protection, basé sur l'existence d'un maximum de corrélation des signaux satellite à proximité de positions de références définies a priori.
Le test du « Maximum Au Centre » (acronyme MAC) défini par l'invention permet de vérifier, sans extraction de retard, que la fonction de corrélation temporelle présente un maximum entre au moins 2 points de corrélation Avance-Retard, la méthode permettant de rejeter les satellites qui, pour la position de référence considérée, présentent un maximum éloigné de plus de $t_0$
En posant,

- P(Sk,Bl), la puissance de la voie ponctuelle pour le signal $S_k$ et la position de référence $B_l$

- E(Sk,Bl), la puissance de la voie avance (décalée de $-\tau_0$ par rapport à la voie ponctuelle)

- L(Sk,Bl), la puissance de la voie retard (décalée de $+\tau_0$ par rapport à la voie ponctuelle)

En écrivant, conformément aux expressions (f.6) et (f.7) données en annexe,

$$P(\text{Sk, Bl}) = \int_{Tint} S_k(t).C_k^*(t - \tau_{Bl})dt + \int_{Tint} N(t).C_k^*(t - \tau_{Bl})dt$$

$$E(\text{Sk, Bl}) = \int_{Tint} S_k(t).C_k^*(t - \tau_{Bl} - \tau_0)dt + \int_{Tint} N(t).C_k^*(t - \tau_{Bl} - \tau_0)dt$$

$$L(\text{Sk, Bl}) = \int_{Tint} S_k(t).C_k^*(t - \tau_{Bl} + \tau_0)dt + \int_{Tint} N(t).C_k^*(t - \tau_{Bl} + \tau_0)dt$$

Alors, le test de décision pour détecter la présence d'un biais s'écrit :

$$\left(P(Sk, Bl) < E(\text{Sk, Bl})\right) \cup \left(P(Sk, Bl) < L(\text{Sk, Bl})\right)$$

Il implique que, pour toute hypothèse de position correspondant à des signaux retardés en temps de plus de $t_0$ de la vraie position en regard de la direction des signaux associés, la plupart des signaux satellites ne seront pas retenus (sauf ceux situés sur le même front d'onde), et donc que le niveau de la fonction de corrélation cumulée (multi-satellites) pour ces autres hypothèses de positions sera faible.

Pour autant, pour l'hypothèse de position correspondant à la vraie position, tous les satellites ne seront pas retenus, en particulier les satellites qui présenteraient des biais supérieurs à $t_0$ (évitant en cela un « étalement » de la fonction de corrélation spatiale généralisée). Seuls les satellites dont les erreurs restent compatibles du grain d'incertitude en retard sont sélectionnés.

L'impact de la prise en compte à tort pour le calcul du niveau de corrélation de la vraie balise d'une contribution de corrélation d'un satellite qui serait en fait biaisé, mais qui serait vu par le contrôle de l'intégrité comme compatible du domaine de corrélation de la balise (du fait de l'erreur de mesure), reste en fait relativement faible si le rythme du contrôle de l'intégrité est le même que le rythme d'estimation de la position, puisque cette erreur ne fait que conforter un « bon » choix

Le test de vérification du maximum central, permet ainsi :

- D'une part de rejeter facilement la plupart des hypothèses de positions qui sont trop éloignées de la vraie position,

- D'autre part, si on teste la vraie position, de rejeter des signaux erronés (biais de temps satellites ou retard excessif de propagation),

- Et aussi, de rejeter des satellites non erronés mais qui, à RSB trop faible, présentent une fonction de corrélation trop bruitée.

Cependant, si le rapport signal à bruit est trop faible, il reste possible que les estimations des valeurs de corrélation soient trop bruitées et qu'un signal retardé de plus de $t_0$ présente quand même un maximum au point milieu (statistiquement rare mais possible).

Pour pallier ce risque, un tri supplémentaire est appliqué sur le niveau minimum du rapport signal à bruit des signaux participant au cumul multi satellites.

Moyennant un accroissement de la charge de calcul, le principe du maximum au centre, détaillé avec 3 points de corrélation par la suite, peut être étendu, dans un mode de réalisation ultérieur, pour un nombre de points de corrélation plus important, par exemple 13 valeurs d'offset comprises entre -90ns et +90ns, toutes les 15ns, afin de réaliser un filtrage des fonctions de corrélation individuelles par interpolation temporelle et de vérifier que le maximum est situé dans une fourchette de retard liée au rayon de protection.

Un tel filtrage contribue à réduire l'impact des bruits additionnels et des incertitudes de modèle, et donc de réduire les risques de non-détection ou de fausse alarme associé à ce critère.

Dans un mode de réalisation simple, le procédé consisterait à utiliser au moins 3 points de corrélation, dits avance-ponctuel-retard (ou encore « early-punctuallate » en anglais) et désigné par l'acronyme EPL, espacés de la valeur de l'imprécision de phase de code standard (qui dépend de la durée d'intégration de la fonction de corrélation), et de vérifier que le maximum est au centre.

Cependant, comme tout système de détection, le test de contrôle de l'intégrité peut signaler à tort à l'algorithme de positionnement qu'un signal est erroné, ou bien, ne pas pouvoir détecter qu'un signal est erroné, justement parce qu'une erreur d'estimation de la mesure biaisée vient compensée le biais réel (erreur géométrique comprise).

Le test du « maximum au centre » effectue le contrôle des défauts au niveau des signaux satellites individuels, en réalisant une protection contre les biais de retard de chaque signal satellite qui dépasse un offset de temps avance -retard ($t_0$) déterminé de manière à assurer les risques de non-intégrité et non continuité requis pour le contrôle d'intégrité

Le rayon de protection minimum en position est déduit de la valeur de l'offset de temps avance -retard ($t_0$) et d'un coefficient de dilution géométrique dépendant de la répartition spatiale des signaux reçus.

La valeur choisie pour cet offset est conditionnée directement par les objectifs fixés en termes de :

- Pfa, correspondant à la probabilité pour qu'un vrai maximum ne soit pas détecté (introduisant en cela une rupture de continuité du service de positionnement), décrite conformément à l'expression (f.3) donnée en annexe, sous la forme :

$$Pfa = p\{(P(Sk, Bl) < \mathrm{E}(Sk, Bl)) \cup (P(Sk, Bl) < \mathrm{L}(Sk, Bl))\}$$

- Pnd, correspondant à la probabilité pour qu'une vraie erreur ne soit pas détectée (perte d'intégrité) décrite conformément à l'expression (f.25) donnée en annexe), sous la forme :

$$Pnd = p\{(P(Sk, Bl) > \mathrm{E}(Sk, Bl)) \cap (P(Sk, Bl) > \mathrm{L}(Sk, Bl))\}$$

La perte de continuité est liée à la Pfa et la perte d'intégrité est liée à la Pnd associées à la probabilité d'occurrence de l'erreur

La valeur de l'offset influe aussi directement sur la disponibilité du contrôle d'intégrité (plus il sera choisi petit et moins nombreux seront les satellites retenus)

Ces probabilités dépendent directement :

- De la valeur de l'offset de temps
- De l'étalement de la fonction de corrélation
- Du rapport signal à bruit

Pour un type de code d'étalement donné, et pour un CN0 de réception typique, il est possible de calculer les valeurs objectives de Pnd et Pfa selon les expressions développées en annexe.

La Pfa s'écrit, conformément à l'expression (f.24) donnée en annexe :

$$Pfa = N_{sat} \cdot \left( 1 - erf\left( \frac{\sqrt{SNR_k \cdot \sqrt{\frac{T_{NC}}{T_c}}\left(1 - \frac{\Gamma_{Ck}(\tau_0)}{\Gamma_{Ck}(0)}\right)}}{2} \right) \right)$$

La Pnd s'écrit, conformément à l'expression f.36 donnée en annexe :

$$Pnd < 0,5 \cdot \left( 1 - erf\left( \frac{\sqrt{SNR_k\left(1 - \frac{\Gamma_{Ck}(\tau_0)}{\Gamma_{Ck}(0)}\right)}}{2} \right) \right)$$

où, $\Gamma_{Ck}(\tau_0)$, représente le niveau de la fonction de corrélation du code d'étalement du signal k pour le retard ($\tau_0$)

Le développement complet de la formulation analytique de la confiance de détection de biais, caractérisée par les valeurs de (Pnd, Pfa, RSB, TTA), associée au seuil $t_0$ est fourni en annexe de la présente invention.

Cette méthode permet de rejeter les satellites qui pour, la position considérée, présentent un maximum éloigné de plus de $t_0$ .

Sous l'hypothèse que au moins 3 satellites sont visibles simultanément, et que tous sont sélectionnés par la barrière de détection du MAC, alors une expression majorante du rayon de protection en position sur le plan horizontal est donnée, conformément à l'expression (f.35) de l'annexe, par :

$$RP = \tau_0 \times min_{(i,j)\epsilon Ns \times Ns}\left[ \left( \frac{1}{\cos(El_i)} \times \frac{1}{\cos(El_j)} \right) \times \frac{1}{\sin(Az_i - Az_j)} \right]$$

où,

$\tau_0$ est l'offset de temps des voies avance et retard de la barrière de détection du MAC

$N_s$ représente l'ensemble des satellites sélectionnés par l'algorithme MAC

(i,j) est un couple d'indice i et j parmi ces satellites

$Az_i$ est l'angle d'incidence en azimut (par rapport au nord) du signal satellite i

$El_i$ est l'angle d'incidence en élévation (par rapport au plan horizontal) du signal satellite i

Dans un des cas d'application pour le rail, lié à [D2] on recherche la balise la plus proche de la position réelle du récepteur, dans le cas d'une grille de positions possibles suffisamment dense autour d'une première position estimée par un PVT classique (donc a priori avec un rayon de protection PL du RAIM assez large).

Dans ce cas, l'impact de l'incertitude de la position du récepteur par rapport au maillage, inférieure à la demi-maille, doit toujours rester inférieur à celui dû aux bruits qui affectent la fonction de corrélation (donc indiscernable dans le bruit de mesures), et garder un impact négligeable sur la détection de tout biais

La précision du positionnement ne peut donc pas, dans ce cas, être inférieure au maillage de la grille, même en cas de réception idéale absente de toute erreur sur les signaux reçus (erreur équirépartie sur +/- un demi pas de maillage).

Les bruits pris en compte pour l'établissement du rayon de protection, et qui participent au risque de perte de la position concernent :

- L'erreur de référencement des positions des balises

- Les erreurs résiduelles de correction des retards de propagation des signaux (dérives et biais d'horloge récepteur & satellites, retard de propagation ionosphérique et troposphérique, retard de groupe récepteur et d'antenne)

- Les erreurs de trajet multiples sous l'hypothèse de réflexions diffuses (non spéculaires), qui peuvent se modéliser par une distribution statistique

- Le bruit d'estimation des niveaux de corrélation après filtrage adapté (perte de corrélation des signaux Satellites & Récepteur, facteurs de bruit, ....)

Les biais non attendus susceptibles de participer à la non-intégrité de la position sont eux relatifs :

- aux biais de trajets multiples (en général, des biais dus à des réflexions spéculaires)

- à des biais de propagation intempestif non pris en compte par les modèles de corrections. C'est le cas en particulier des biais de propagation ionosphérique à faible latitudes, ou en cas de perturbation du champ magnétique terrestre)

- à des biais de corrections non détectés par le système GNSS (orbitographie des satellites, biais d'horloge, ...)

- à des défaillances HW ou SW non détectées du récepteur et de son antenne (RF, TOS, ....)

Dans un autre cas d'application pour le rail, lié à [D1], du positionnement à l'affût pour une plateforme en mouvement, on suppose que la voie a été correctement initialisée et que l'objet de la détection est de détecter un passage obligé du récepteur exactement sur la position de la balise de référence, sans aucun résidu d'erreur géométrique.

Dans une approche globale, toutes les imprécisions des modèles de corrections rentrent dans la détermination du rayon de protection qui doit correspondre aux Pfa et Pnd souhaités.

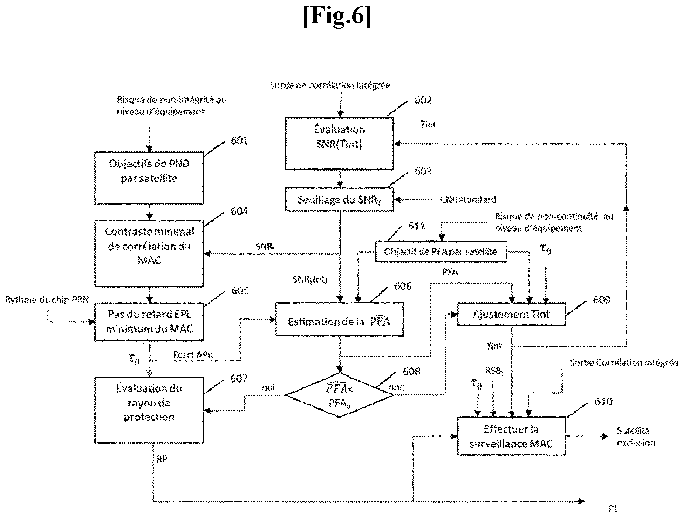

La figure 6 décrit une méthode d'ajustement du rayon de protection en fonction des contraintes de Pnd, Pfa, ainsi que des durées d'intégration cohérente et non cohérente du filtrage adapté.

Si ces erreurs sont trop importantes il peut devenir impossible de réduire le rayon de protection en dessous d'un seuil qui est lié à ces erreurs résiduelles. Si elles ne sont pas suffisamment bien appréciées (au travers de leurs moyenne et écart-type), les axes à vue correspondant à des erreurs non attendues trop importantes devront être rejetés par l'algorithme de contrôle de l'intégrité et déclarés comme biaisés, entraînant en cela une perte de continuité.

L'existence de biais communs du récepteur liés au retard de groupe RF analogique du signal, créés par sa réception au travers des étages d'antenne, préamplificateur, CAG, filtres RF et IF, avant numérisation, est aussi susceptible de réduire la disponibilité du contrôle de l'intégrité MAC et de borner inférieurement le rayon de protection supporté par le contrôle de l'intégrité.

Ce biais RF n'est pas différentiable du biais d'horloge local calculé classiquement par un PVT, impliquant ainsi que, en sus de l'imprécision de l'estimation du temps local résolu par le PVT, le temps local n'est jamais parfaitement synchronisé sur le temps de référence GNSS, si le biais commun RF n'est pas connu par ailleurs. Ce biais non traité de synchronisation de l'échelle de temps locale sur le temps GNSS entraine que les phases de codes prédites (même si elles étaient parfaitement estimées par les modèles) resteraient décalées du biais commun RF pouvant atteindre plusieurs dizaines de ns.

Par ailleurs, ce biais RF est susceptible d'évoluer à court terme avec la température internes du récepteur, et dépend aussi à plus long terme du vieillissement des composants électroniques.

La synchronisation de la base de temps locale du récepteur est supposée préalablement établie et avoir été obtenue par résolution d'un PVT à partir des signaux GNSS, et filtrée à long terme par une horloge atomique dans une fourchette d'erreur typique de quelques dizaines de ns à l'horizon du rythme des mesures. Cependant, la résolution du PVT étant elle aussi soumise à des erreurs inattendues hors statistique, il est nécessaire de s'assurer de l'intégrité de la solution de temps initiale en ayant préalablement réalisé un contrôle de l'intégrité du PVT du type GNSS_RAIM ou SBAS_RAIM, en vue de respecter l'erreur typique de résolution du temps local.

L'erreur résiduelle de résolution du temps local et l'incertitude résiduelle sur le biais RF du récepteur étant d'un ordre de grandeur équivalent ou supérieur à la précision de positionnement par CSG relativement au réseau de balises, il est donc nécessaire de mener une estimation en continue de ce biais commun et de recaller conformément les phases de codes prédites.

Une telle estimation du biais commun étant elle-même tributaire des incertitudes sur les modèles et corrections utilisées pour le calcul des phases de codes aux positions attendues et des éventuels biais pouvant s'y ajouter, l'estimation est définie selon un procédé itératif permettant l'élimination des biais spécifiques aux axes satellites et la convergence progressive vers la valeur du biais commun.

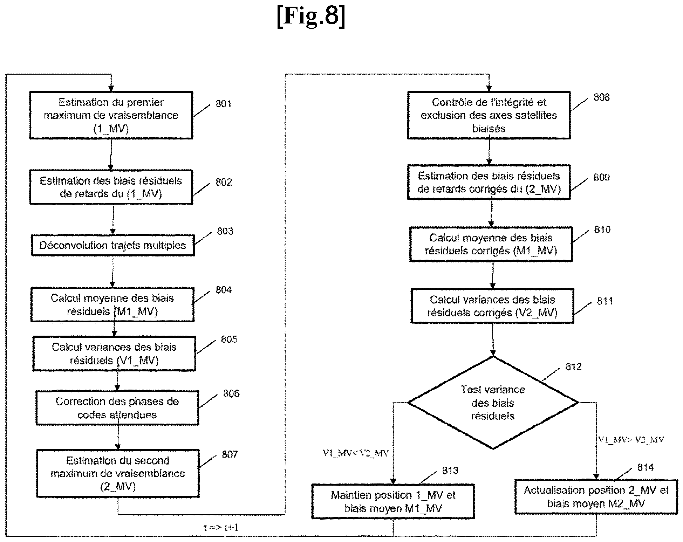

Le procédé est intégré dans le procédé de contrôle de l'intégrité MAC et décrit par la présente invention pour estimer et éliminer ce biais est détaillé en figure 8.

**Description détaillée**

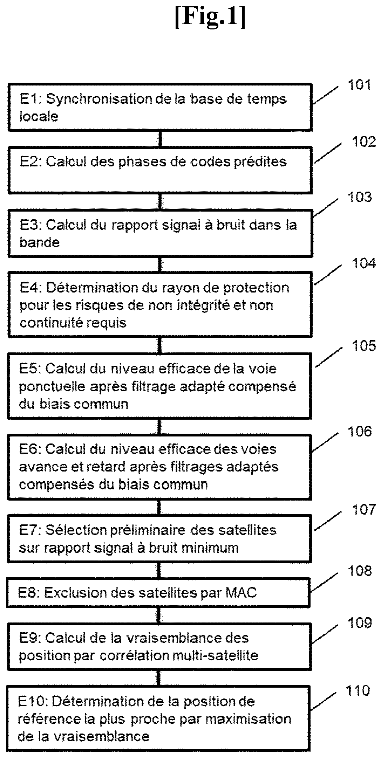

[Fig.1] présente le mode de réalisation le plus général du procédé de contrôle de l'intégrité de la localisation obtenue par détermination de la position au plus près, basée sur le filtrage adapté des signaux GNSS reçus, d'un ensemble de positions de références géoréférencées pour mise en oeuvre sur porteur mobile ou fixe.

Le procédé selon l'invention comprend un ensemble d'étapes, configurées pour mettre en oeuvre une stratégie permettant de vérifier que la fonction de corrélation des signaux GNSS reçus est cohérente de la position de référence sélectionnée, et caractérisé en ce qu'il comporte :

a. Une étape E1 (100) de synchronisation de la base de temps du procédé sur le temps GNSS calculé et transmis par le système de positionnement GNSS

b. Une étape E2 (101) de calcul de la phase de code des signaux GNSS prédits en réception pour l'ensemble desdites positions de références et pour l'ensemble des satellites visibles auxdites positions de référence

c. Une étape E3 (103) de calcul du rapport signal à bruit dans la bande d'observation après filtrage adapté des signaux GNSS reçus avec lesdits signaux GNSS prédits

d. Une étape E4 (104) de détermination conjointe du rayon de protection et de la durée d'intégration du traitement adaptés aux risques de non-intégrité et non continuité requis

e. Une étape E5 (105), appliquée sur chacun desdits signaux GNSS reçus et chacune desdites positions de référence, de calcul du niveau efficace de la voie, dite de corrélation ponctuelle, obtenue après filtrage adapté du signal par le code local attendus pour la phase de code, dite prédite, compensée des biais communs résiduels de retard de groupe du récepteur et de synchronisation sur le temps GNSS, après intégration cohérente et non cohérente

f. Une étape E6 (106), appliquée sur chacun desdits signaux GNSS reçus et chacune desdites positions de référence, de calcul du niveau efficace des voies, dites de corrélation avance et de corrélation retard, obtenues après filtrage adapté du signal par des codes locaux attendus décalés d'une dite fraction de chip de code en avance et en retard par rapport à la phase de code dite prédite de la voie ponctuelle, après intégration cohérente et non cohérente, la dite fraction de chip de code étant déterminée de sorte à respecter la contrainte de probabilité de non-détection d'un biais de phase de code du signal dans un rayon de protection fixé par les objectifs de risque de perte d'intégrité associé au procédé de contrôle

g. Une étape E7 (107) de sélection préalable des signaux satellites aptes à participer au test de contrôle de l'intégrité de la position, sur un critère de niveau minimum de rapport signal à bruit de la voie dite ponctuelle, tel que calculé en étape (E3), permettant d'assurer l'efficacité du test selon les objectifs de probabilités de non-détection et de probabilité de fausse alarmes fixées pour le contrôle de l'intégrité

h. Une étape E8 (108) dite d'exclusion des signaux satellites dont les phases de codes ne sont pas compatibles avec les phases de codes prédites pour les dites positions de références testées ou bien qui présentent des biais de retard inattendus par rapport aux phases de codes prédites dues à des perturbations de propagation ou de synchronisation des signaux, la dite exclusion de satellite étant réalisée sur un critère d'absence d'un Maximum Au Centre, méthode dite MAC, des dits points de corrélation avance-ponctuel-retard

i. Une étape E9 (109) de calcul, pour chacune desdites positions de référence, du niveau efficace de puissance obtenu, dite vraisemblance, par cumul des puissances élémentaires des différents satellites sélectionnés, après intégration cohérente et non cohérente

j. Une étape E10 (110) de détermination de la position de référence la plus proche de la position réelle de réception par identification de la position de référence qui présente la vraisemblance la plus élevée, dans un rayon de protection compatible des contraintes de probabilité de fausse alarme et de non-détection fixées au procédé de contrôle de l'intégrité de la position

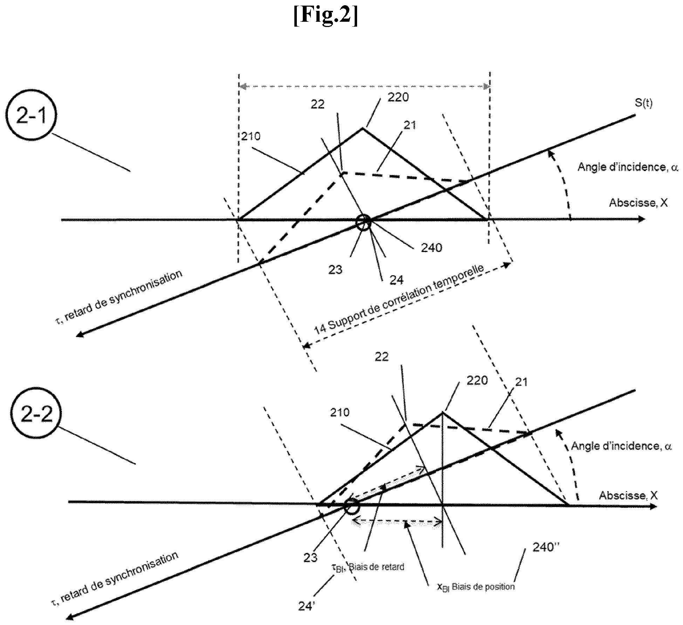

[Fig.2] illustre en (2-1) l'équivalence entre la synchronisation en temps par corrélation temporelle et la synchronisation en position par corrélation spatiale. Cette figure présente une représentation graphique, en fonction du temps, d'une fonction de corrélation temporelle (21) du signal GNSS reçu $S_j(t)$ d'un satellite de géo-positionnement Sat(j) avec le signal attendu en une position d'abscisse Xi (240) d'une balise $B_l(i)$ (23) et un retard t par rapport au temps de synchronisation attendu ti (24) pour l'abscisse Xi.

Le support $T_{corr}$ (14) de cette fonction de corrélation temporelle 21 correspond à la durée d'un chip d'une séquence de code GNSS. Le terme « chip », utilisé dans les techniques GNSS, désigne une information binaire modulant le signal d'une séquence de code GNSS et diffère de la notion de bit qui est utilisée pour définir une unité d'information. Par exemple, la durée d'un chip pour le système GPS (en anglais « Global Positioning System ») est de 1 $\mu$s. Le maximum 22 de cette fonction de corrélation temporelle 21 est obtenu pour le retard de synchronisation ti du signal attendu avec le signal $S_j(t)$ reçu par le récepteur GNSS. (2-1) illustre que le retard t du maximum de corrélation (22) est nul lorsque le temps de propagation du signal est parfaitement estimé et lorsque la base de temps local du récepteur est parfaitement alignée sur le temps GNSS

[Fig.2] présente aussi une représentation graphique unidimensionnelle, en fonction de l'abscisse X autour de la position d'abscisse Xi (240) de la position de la balise $B_l(i)$, d'une fonction de corrélation spatiale 210 équivalente du signal GNSS reçu par le récepteur en provenance du satellite de géo-positionnement Sat(j) avec le signal attendu en le point $B_l(i)$ d'abscisse Xi et au temps de synchronisation ti

Le support $X_{corr}$ (140) de cette fonction de corrélation spatiale 220 correspond à la projection du support de corrélation temporelle $T_{corr}$ (14) sur l'axe de variation de la position du récepteur GNSS autour de la balise $B_l(i)$. Le support de corrélation spatiale $X_{corr}$ et le support de corrélation temporelle $T_{corr}$ sont liés par la formule :

$$X_{corr} = c^* \, T_{corr} \, / \cos(\alpha j)$$

dans laquelle :

$X_{corr}$ désigne ici la longueur du support de la fonction de corrélation spatiale ;
c désigne la célérité de la lumière ;
$T_{corr}$ désigne le support de la fonction de corrélation temporelle ;
$\alpha j$ désigne l'angle d'incidence du signal satellite émis par le satellite Sat(j), j étant compris entre 1 et NSat par rapport à la direction de déplacement du véhicule ;.

Le maximum 220 de cette fonction de corrélation temporelle 210 correspond à l'abscisse de synchronisation du signal GNSS attendu avec le signal reçu par le récepteur GNSS en provenance du satellite Sat(j), il indique la position la plus proche de la balise $B_l(i)$. La synchronisation étant supposée parfaitement réalisée, le maximum 220 correspond à l'abscisse Xi de la position P(i) de la balise $B_l(i)$.

La partie (2-2) de la figure 2 illustre le déplacement des fonctions de corrélation temporelle et spatiale en présence d'un biais de synchronisation Dt sur la base de temps local ou d'un biais DX sur le géoréférencement de la référence de position, conduisant à un décalage homothétique de la position des maximas de corrélation sur l'axe des retards (24') et l'axe des abscisses (240')
On peut noter que dans le cas d'un biais commun de temps affectant simultanément et de la même façon tous les signaux reçus, le décalage induit sur les fonctions de corrélation temporelles sera identique, alors que le décalage selon l'abscisse va varier avec les satellites selon l'angle d'incidence sur l'axe de déplacement, anticipant en cela que l'identification de biais communs peut être obtenue par moyennage des erreurs de temps multi-satellites.

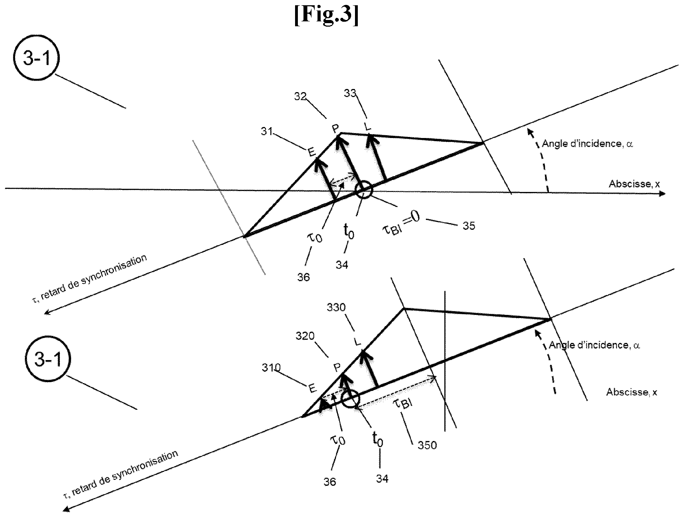

[Fig.3] illustre le principe de la détection de biais de temps par surveillance du Maximum Au Centre (MAC) sur 3 points de corrélation avance (E) -ponctuel (P) - retard (L). La phase de code du point de corrélation ponctuel (P) est calée sur le retard attendu du signal reçu et les phases de codes des points avance (E) et retard (L) sont décalées de part et d'autre du retard attendu de la voie ponctuelle d'une valeur correspondant au niveau de protection attendue en position.

La partie (3-1) illustre que le niveau du point de corrélation central reste statistiquement plus grand que les points de corrélation latéraux (P>E et P>L) tant que l'erreur de synchronisation du signal reçu reste inférieure à l'espacement séparant les bribes de corrélation, permettant en cela la sélection pour la détermination de la position par maximum de vraisemblance de ne retenir que les signaux compatibles d'une distribution d'erreur de synchronisation donnée.

La partie (3-2) illustre que le niveau du point de corrélation ponctuel sera statistiquement dépassé par au moins une des voies latérales (P<E ou P<L) si l'erreur de synchronisation du signal est supérieure à l'espacement entre les échantillons de corrélation. Il est à noter que ce principe de surveillance ne dépend pas de la direction d'incidence du signal. Il fournit un critère simple de mise en oeuvre pour évaluer l'apport des signaux dans réalisation d'un maximum de vraisemblance basé sur le filtrage adapté des signaux reçus.

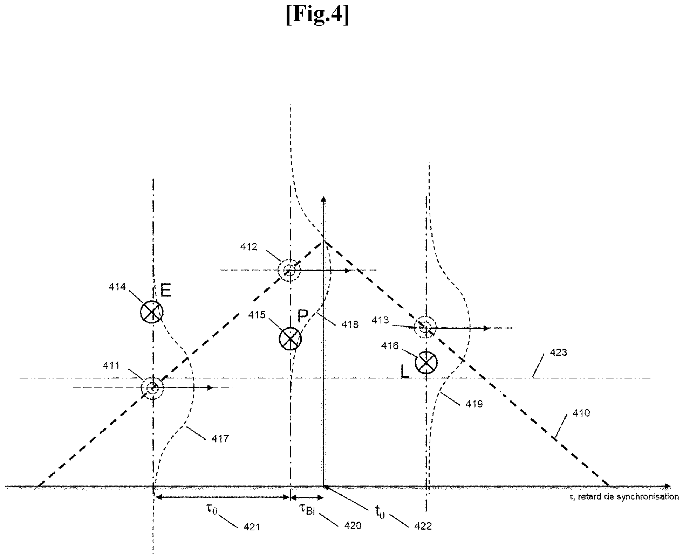

[Fig.4] illustre une situation de fausse alarme détectée selon l'algorithme MAC, en réception d'un signal satellite $S_k(t)$ sur la balise $B_l$, correspondant à un cas d'absence de biais (hypothèse H0), mais pour lequel le test de décision MAC détecte cependant la présence d'un biais de synchronisation excessif en appliquant le critère ($P(Sk,Bl) > E(Sk, Bl)$) $\cap$ ($P(Sk,Bl) > L(Sk, Bl)$), puisque, dans le cas illustré, E(Sk, Bl)> $P(Sk, Bl)$>L(Sk, Bl)

(410) représente l'enveloppe de la fonction de corrélation $\Gamma_{H0}(Sk, Bl)$ du signal $S_k(t)$ avec le code local synchronisé sur le temps de réception t0 (422) attendu pour la balise $B_l$

$t_0$ (421) désigne le retard appliqué entre les échantillons de corrélation Avance-Ponctuel (E-P) et Ponctuel-Retard (P-L) du code local

$t_{Bl}$ (420) désigne l'erreur résiduelle de synchronisation du code local par rapport au temps de réception théorique attendu t0, liée au bruit de phase et aux erreurs de modèle (a priori faible en absence de tout autre biais important)

(411), (412), (413) représentent les niveaux de puissances théoriques en absence de bruit d'estimation de la fonction de corrélation, respectivement des voies avance (E), ponctuelle (P) et retard (L)

(414), (415), (416) représentent une occurrence de niveaux de puissances effectivement obtenue en prenant en compte le bruit d'estimation de la fonction de corrélation, respectivement des voies avance (E), ponctuelle (P) et retard (L)

(417), (418), (419) représentent la distribution statistique de l'erreur d'estimation des niveaux de la fonction de corrélation, respectivement pour les voies E, P, L, en présence de bruit.

Cette distribution est supposée Gaussienne, centrée sur les valeurs de niveaux théoriques attendus en ces points, et d'écart-type fourni par le rapport signal à bruit mesuré dans la bande de réception de la voie ponctuelle.

Afin de limiter les cas d'erreur de détection de signaux fortement biaisés susceptibles de générer des fausses alarmes à faible rapport à bruit, un seuil de sélection des signaux sur une critère de rapport signal à bruit minimum (423) est appliqué préalablement à l'algorithme MAC).

La même séquence de bruit participant à la corrélation des voies E, P, L, la distribution statistique est la même pour chacune des voies. Cependant, du fait de la corrélation microscopique de ce bruit (essentiellement du bruit thermique reçu via l'antenne et du bruit de grenaille du récepteur), les bruits obtenus, issus de corrélations décalées avec le code local, sont considérés comme indépendants entre les voies de corrélation

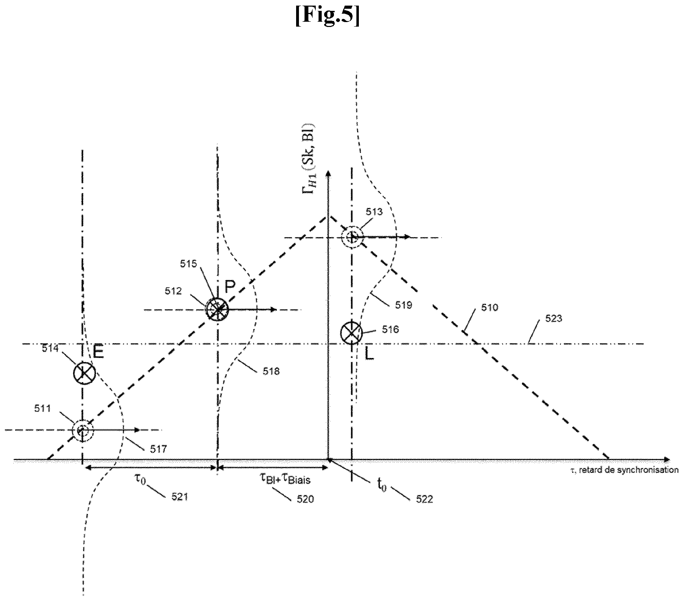

[Fig.5] illustre une situation de non-détection d'un biais de synchronisation selon l'algorithme MAC, en réception d'un signal satellite $S_k(t)$ sur la balise $B_l$, malgré la présence d'un biais réel (hypothèse H1), mais pour lequel le test de décision MAC ne détecte pas la présence d'un biais excessif en appliquant le critère ($P(Sk, Bl) > E(Sk, Bl)$) $\cap$ ($P(Sk, Bl) > L(Sk, Bl)$) puisque, dans le cas illustré, (E(Sk, Bl)< $P(Sk, Bl)$ et L(Sk, Bl) < $P(Sk, Bl)$)

(510) représente l'enveloppe de la fonction de corrélation $\Gamma_{H0}(S_k,B_l)$ du signal $S_k(t)$ avec le code local synchronisé sur le temps de réception $t_0$ (422) attendu pour la balise $B_l$

$\tau_0$ (521) désigne le retard appliqué entre les échantillons de corrélation Avance-Ponctuel (E-P) et Ponctuel-Retard (P-L) du code local

$\tau_{Bl}$ (520) désigne l'erreur résiduelle de synchronisation du code local par rapport au temps de réception théorique attendu t0 (522), liée au bruit de phase et aux erreurs de modèle (a priori faible en absence de tout autre biais important)

$\tau_{Biais}$ (520) désigne un biais additionnel de synchronisation du code local par rapport au temps de réception théorique attendu t0 (522), liée à des aléas de propagation du signal, à la présence de biais de temps commun (du type biais l'horloge locale ou d'un retard de groupe RF non compensé du récepteur)

(511), (512), (513) représentent les niveaux de puissances théoriques en absence de bruit d'estimation de la fonction de corrélation, respectivement des voies avance (E), ponctuelle (P) et retard (L)

(514), (515), (516) représentent une occurrence de niveaux de puissances effectivement obtenue en prenant en compte le bruit d'estimation de la fonction de corrélation, respectivement des voies avance (E), ponctuelle (P) et retard (L)

(517), (518), (519) représentent la distribution statistique de l'erreur d'estimation des niveaux de la fonction de corrélation, respectivement pour les voies E, P, L, en présence de bruit.

Identiquement à la figure 4, cette distribution est supposée Gaussienne, centrée sur les valeurs de niveaux théoriques attendus en ces points, et d'écart-type fourni par le rapport signal à bruit mesuré dans la bande de réception de la voie ponctuelle.

Afin de limiter les cas d'erreur de détection de signaux fortement biaisés susceptibles de générer des non-détections à faible rapport à bruit, un seuil de sélection des signaux sur une critère de rapport signal à bruit minimum (523) est appliqué préalablement à l'algorithme MAC.

[Fig.6] décrit la méthode de détermination conjointe du rayon de protection et de la durée d'intégration du traitement, selon l'étape E4, adaptés au risque de non-intégrité et de non-continuité du procédé de contrôle, caractérisée en ce que :

- La Pnd attendue du monitoring par satellite est dérivée du risque de perte d'intégrité fixé au niveau de l'équipement (601)
- Le contraste de corrélation objectif par satellite, défini par le produit

$$SNR_k \cdot \sqrt{\frac{T_{NC}}{T_c}} \left( 1 - \frac{\Gamma_{Ck}(\tau_0)}{\Gamma_{Ck}(0)} \right)$$ est déduite analytiquement de la valeur de Pnd attendue (604)

- La Pfa attendue du monitoring par satellite est dérivée du risque de perte de continuité fixé au niveau de l'équipement (611)
- La durée d'intégration cohérente et non cohérente est déterminée à partir du TTA fixé au niveau de l'équipement (609)
- Le seuil de rapport signal à bruit minimum correspondant à la durée d'intégration cohérente et non cohérente est calculé à partir d'une valeur nominale du CN0 minimum garanti des signaux GNSS en réception (603)
- Le retard minimum ($\tau_0$) entre la voie ponctuelle et les voies avance et retard, contribuant au calcul du rayon de protection du contrôle de l'intégrité est déduit du contraste de corrélation objectif, du seuil sur le rapport signal à bruit minimum calculé et de la largeur de chip du code PRN du signal (605)
- La Pfa objective du contrôle de l'intégrité est déduite analytiquement à partir du contraste de corrélation objectif (606)
- Si la Pfa objective est inférieure à la Pfa attendue, le retard ($\tau_0$) entre voies avance-ponctuel-retard définit le seuil de détection de biais de la barrière de protection du contrôle de l'intégrité
- A partir de l'écartement entre les échantillons de corrélation de la barrière de détection de biais au niveau satellite, on calcule le rayon de protection en position (607) sous l'hypothèse que au moins 3 satellites sont visibles simultanément, et que tous sont sélectionnés par la barrière de détection du MAC. Une expression du rayon de protection en position majorant sur le plan horizontal est donnée par :

$$RP = \tau_0 \times min_{(i,j)\epsilon Ns \times Ns} \left[ \left( \frac{1}{\cos(El_i)} \times \frac{1}{\cos(El_j)} \right) \times \frac{1}{\sin(Az_i - Az_j)} \right]$$

- où,

    (i) $\tau_0$ est le décalage des voies avance et retard de la barrière de détection du MAC
    (ii) Ns représente l'ensemble des satellites sélectionnés par l'algorithme MAC
    (iii) (i,j) est un couple d'indice i et j parmi ces satellites
    (iv) Azi est l'angle d'incidence en azimut (par rapport au nord) du signal satellite i
    (v) Eli est l'angle d'incidence en élévation (par rapport au plan horizontal) du signal satellite i

- Si le rayon de protection du contrôle de l'intégrité est supérieur au rayon d'alarme limite toléré pour le service de positionnement, le contrôle de l'intégrité du système de positionnement est déclaré irréalisable pour les objectifs de Pnd et Pfa attendus (608)
- Si la Pfa objective est supérieure à la Pfa attendue,

    - la durée d'intégration cohérente en sortie de filtrage adaptée est progressivement augmentée (609) jusqu'à une durée égale au TTA, de sorte à optimiser le rapport signal à bruit de sortie après filtrage adapté

$$SNR_k \cdot \sqrt{\frac{T_{NC}}{T_c}} \ (602)$$

    - Les objectives de Pfa (606) et le rayon de protection (605) sont recalculés avec le nouveau rapport signal à bruit de sortie, sans modification du rayon de protection du contrôle de l'intégrité, selon les formulations analytiques du mémoire (606)

    - Si la Pfa objective recalculée reste supérieure à la Pfa attendue, le contrôle de l'intégrité du système de positionnement est déclaré irréalisable pour les objectifs de Pnd et Pfa attendus

- Si la Pfa objective recalculée est inférieure à la Pfa attendue, le contrôle de monitoring MAC est applicable en respectant les objectifs de sûretés fixés au niveau de l'équipement, et dans le rayon de protection calculé.

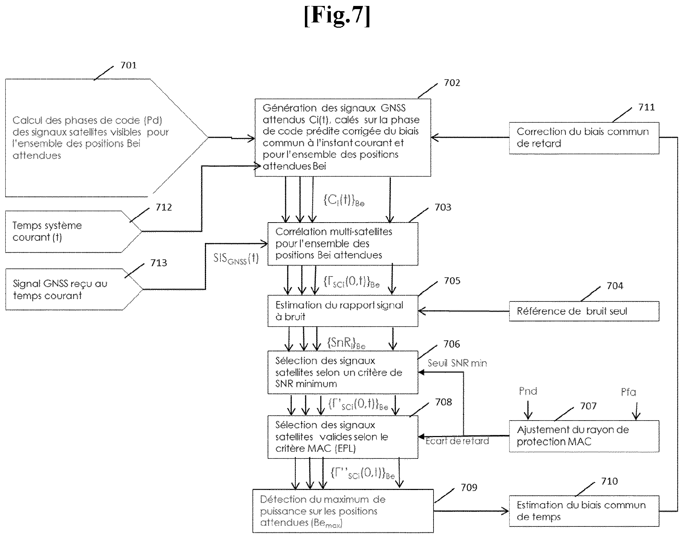

[Fig.7] décrit un synoptique général de réalisation du contrôle de l'intégrité MAC, en indiquant notamment les liaisons et l'imbrication avec les étapes de traitement déjà menées pour réaliser la détermination de position à l'affût, telle que décrite dans les brevets [D1] et [D2]

(701), (712], (713) indiquent comme préalables au traitement, respectivement, les étapes de calcul des phases de codes (Pd) des signaux satellites visibles pour l'ensemble des positions attendues, de synchronisation de la base de temps locale du récepteur avec le temps de référence du système GNSS, sources des signaux utilisés, et enfin de réception du signal GNSS d'antenne filtré et numérisé. Ces étapes sont déjà en place dans le système intégrant le procédé au titre de la détermination de la position à l'affût.

(702) réalise l'adaptation, à partir du traitement de la détermination de la position à l'affût, le procédé de génération des signaux GNSS attendus $C_i(t)$, calés sur la phase de code prédite, en y introduisant en complément la correction du biais commun de synchronisation estimé par le monitoring MAC à l'instant courant, et appliqué pour l'ensemble des positions attendues Be

(703) reprend tel quel le procédé de corrélation multi-satellites pour l'ensemble des positions attendues, pour réaliser le filtrage adapté entre le signal GNSS reçu et les signaux locaux attendus

(704) et (705) traite du calcul du rapport signal à bruit calculé dans la bande de réception, définie par la durée d'intégration cohérente de corrélation du filtrage adapté, respectivement pour le calcul de la référence de bruit seul puis le calcul du rapport signal à bruit prenant en compte les niveaux des sorties de corrélation.

Les signaux utilisés par l'algorithme MAC étant préalablement sélectionnés sur la base de leur rapport signal à bruit, l'extraction du niveau de bruit seul après filtrage adapté nécessite une attention particulière, afin de rejeter de cette référence toute contribution des signaux. Cette réjection est obtenue en réalisant la corrélation du signal reçu avec le code local avec le retard le plus important possible de sorte à sortir du domaine de corrélation du signal. Cependant la fonction de corrélation du signal étant périodique, au rythme de répétition du code (1ms pour GPS C/A), on retient un retard d'une demi-période de code (0,5ms).

Afin d'éliminer des contributions de signal liées aux remontées des secondaire de corrélation du signal (typiquement situé à -21 dB par rapport au code adapté), on recherche ensuite le niveau minimum de la référence de bruit seul parmi l'ensemble des signaux corrélés.

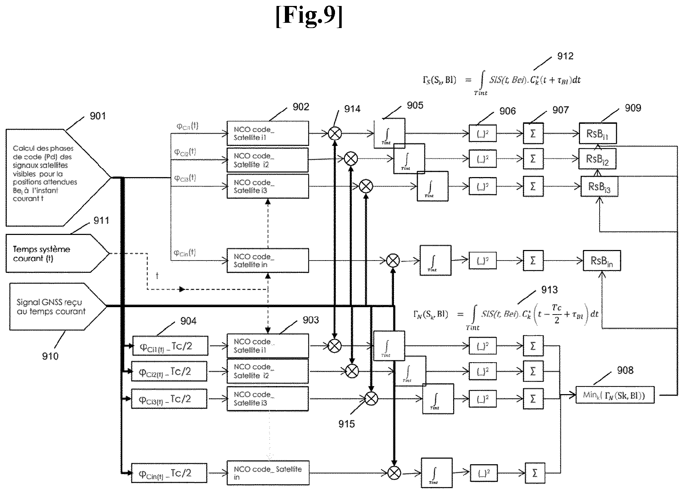

Ces étapes de traitement sont détaillées en figure 9.

(706) réalise une première sélection des signaux sur la base du rapport signal à bruit calculé pour la voie de corrélation ponctuelle, le seuil de sélection étant défini sur la base de l'objectif de fausse alarme fixé à l'équipement (603)

(707) réalise l'ajustement du rayon de protection de l'algorithme MAC en fonction des objectifs de Pnd et Pfa et du niveau du seuil sur le rapport signal à bruit. Ce procédé est détaillé en figure 6.

(708) Applique l'algorithme MAC pour réaliser l'exclusion des signaux biaisés au-delà du rayon de protection, et associe le rayon de protection aux contraintes de Pfa et Pnd

(709) réalise la sélection la position de référence la plus proche du maximum de vraisemblance, comme cela est réalisé de base pour la détermination de position à l'affût.

(710) extrait les résidus d'erreur de temps pour la position la plus vraisemblable, et détecte et détermine l'existence d'un biais commun sur les phases de codes prédites. Ce traitement est détaillé en figure 8.

(711) réalise la correction des phases de codes prédites, par la valeur du biais commun extrait par (710) et entretient le calcul au temps courant.

[Fig.8] décrit le procédé mise en oeuvre dans cette invention pour estimer et éliminer ce biais selon les étapes suivantes :

(801) Lors de la phase de lancement du procédé au démarrage, première estimation au temps courant (t) de la position la plus probable (1-MV) par rapport à une grille de positions possibles. Cette estimation par CSG est réalisée par calcul de la meilleure vraisemblance, dit premier maximum de vraisemblance, consistant à sommer les fonctions de corrélation multi-satellites pour chaque hypothèse de position de référence attendue sur la grille et à déterminer la position sur la grille présentant la meilleure vraisemblance, telle que décrite par [D1] ou [D2],

(802) Estimation au temps courant (t) des retards de corrélation, dits biais résiduels, pour chacun des axes satellite reçus, par rapport aux phases de codes attendues pour chaque satellite reçu, pour la seule position dudit premier maximum de vraisemblance, qui, en absence de biais non attendu, est le plus susceptible de présenter les retards géométriques les plus faibles (802). Ledit biais résiduel est estimé par extraction, sur l'axe des retards, du maximum de corrélation du code du signal reçu avec le code du signal attendu,

(803) Pour réaliser l'extraction au temps courant (t), application d'une méthode de déconvolution des trajets multiple à plusieurs points de corrélation (803), par exemple en utilisant une méthode de type double-delta à 5 points qui couvre une grande partie du domaine de corrélation du code, adaptée pour les cas de réflexions spéculaires. Plusieurs méthodes d'extraction de la phase de code (ou temps reçu) sont connues du domaine de l'art des récepteurs GNSS pour permettre de minimiser l'impact des trajets multiples spéculaires sur l'erreur d'estimation du temps reçu. Elles mettent généralement en oeuvre une batterie de plusieurs retards de corrélations répartis autour du corrélateur central (dit aussi corrélateur ponctuel) asservi en temps sur la phase de code attendue ou poursuivie,

(804) Calcul de la moyenne (M1-MV) de la distribution des biais résiduels de retard au temps courant (t) sur l'ensemble des satellites reçus pour la position dudit premier maximum de vraisemblance,

(805) Calcul de la variance (V1-MV) de la distribution des biais résiduels de retard au temps courant (t) sur l'ensemble des satellites reçus pour la position dudit premier maximum de vraisemblance, dite variance des biais du premier maximum de vraisemblance,

(806) Correction des phases de codes attendues (dites phases de codes attendues corrigées) au temps courant (t) par le biais résiduel moyen, pour tous les signaux reçus,

(807) Rafraichissement de la position la plus probable par rapport à la grille, au temps courant (t), par calcul de la meilleure vraisemblance par rapport auxdites phases de codes attendues corrigées, dit second maximum de vraisemblance (2-MV), appliquée sur les mêmes signaux reçus,

(808) Application du procédé de contrôle de l'intégrité MAC pour calcul du rayon de protection et éventuelle exclusion d'axes à vues défaillants,

(809) Calcul au temps courant (t) des retards de corrélation corrigés, dits biais résiduels corrigés, pour chacun des axes satellite reçus, par rapport aux dites phases de codes attendues corrigées pour chaque satellite reçu. Ledit biais résiduel corrigé est estimé par extraction, sur l'axe des retards, du maximum de corrélation du code du signal reçu avec le code du signal attendu corrigé, en mettant en oeuvre la même méthode de déconvolution des trajets multiple spéculaires,

(810) Calcul de la moyenne (M2-MV) de la distribution desdits biais résiduels corrigés au temps courant (t) sur l'ensemble des satellites reçus pour la position dudit second maximum de vraisemblance,

(811) Calcul de la variance (V2-MV) de la distribution desdits biais résiduels corrigés au temps courant (t) sur l'ensemble des satellites reçus pour la position dudit second maximum de vraisemblance, dite variance des biais du second maximum de vraisemblance

(812) Validation de la sélection du second maximum de vraisemblance au temps courant (t), par vérification que la variance de la variance du second maximum de vraisemblance est inférieure à la variance du premier maximum de vraisemblance :

- (813) Si V1_MV > V2_MV, la position du second maximum de vraisemblance est sélectionnée et le biais résiduel est actualisé par le biais résiduel corrigé (M2_VM)
- (814) Si V1_MV < V2_MV, la position du premier maximum de vraisemblance est sélectionnée et le biais résiduel associé au premier maximum de vraisemblance est maintenu (M1_MV)

(801) Au temps suivant (t+1), retour à l'étape, pour estimation de la nouvelle meilleure vraisemblance de position, ceci après avoir corrigé les phases de codes attendues au temps (t+1) par le biais résiduel moyen calculé au temps (t), ce pour tous les signaux reçus encore sélectionnés.

[Fig.9] décrit le procédé d'estimation du rapport signal à bruit avec identification d'une référence de bruit seul.
(901), (910), (911) indiquent comme préalables au traitement, respectivement, les étapes de calcul des phases de codes (Pd) des signaux satellites visibles pour la position attendue, de synchronisation de la base de temps locale du récepteur avec le temps de référence du système GNSS source des signaux utilisés et enfin de réception du signal GNSS d'antenne filtré et numérisé. Ces étapes sont déjà en place dans le système intégrant le procédé au titre de la détermination de la position par CSG.
La série des traitements (904) réalise un décalage de Tc/2 de chacune des phases de codes des signaux satellites reçus sur la balise Be(i) avec laquelle on vérifie l'intégrité des signaux reçus (en principe, celle fournissant le maximum de vraisemblance), où Tc est la longueur du code PRN du signal GNSS reçu (par exemple, le décalage est de 0,5ms dans le cas de signaux GPS C/A). Dans le cas de signaux faiblement périodique (du type voie pilote utilisée par Galileo, ce décalage pourra atteindre jusqu'à 50ms.
Ce décalage a pour but de rechercher une référence de bruit seul servant au calcul de l'écart-type du bruit de sortie, après corrélation, intégration cohérente sur une durée dépendant de la stationnarité de la phase du signal (liée au rythme de transition de phase des données) et une éventuelle intégration non-cohérente).

La série des oscillateurs numériques (NCO code) (902) réalise la génération des codes PRN locaux pour chacun des signaux GNSS attendus Ci(t), calés sur la phase de code prédite pour la positions attendue Be(i). Ce traitement, destiné à fournir l'estimation du niveau de puissance du signal obtenu sur la voie ponctuelle (P) après filtrage adapté, est mené de base par le traitement de détermination de la position.

La série des oscillateurs numériques (NCO code) (903) réalise la génération des codes PRN locaux pour chacun des signaux GNSS attendus Ci(t), décalés de Tc/2 par rapport à la phase de code prédite pour la positions attendue Be(i). Ce traitement, destiné à fournir l'estimation du niveau de puissance du bruit seul sur la voie ponctuelle (P) après filtrage adapté, n'est pas mené de base par le traitement de détermination de la position. Ces signaux sont dits voies de signal.

Les batteries de multiplieurs complexes (914) et (915) réalise la multiplication du signal reçu avec les codes locaux générés par les oscillateurs numériques pour les voies signal (non retardées) et les voies bruit (retardées de Tc/2). Ces signaux sont dits voies de bruit.

Les intégrateurs (905) réalisent l'intégration cohérente des sorties multipliées sur une durée identique pour lesdites voies signal et les voies bruit.

(912) fournit la formulation analytique en sortie de filtrage adapté pour les voies signal.
(913) fournit la formulation analytique en sortie de filtrage adapté pour les voies bruit.

Dans une version de base, mais pas exclusive, l'intégration cohérente est réalisée sur une durée de 1ms adaptée aux signaux GPS, mais peut évoluer selon la période des codes GNSS utilisés, ou encore selon la capacité à démoduler en temps réel la phase des données portée par les signaux reçus.

Les quadrateurs (906) réalise la détection des signaux complexe (I&Q) de sortie de filtrage adapté de façon identique pour lesdites voies signal et les voies bruit.

Les intégrateurs (907) réalisent l'intégration non-cohérente des sorties détectées en vue d'estimer le rapport signal à bruit sur le même horizon de temps que la détermination de position par maximum de vraisemblance

(908) détermine la valeur de puissance minimal en sortie des voies bruits, afin de sélectionner la référence de bruit seul présentant la contribution la plus faible possible du signal.
(909) réalise le calcul du rapport signal à bruit estimé pour chacun des signaux reçus, selon la formule suivante :

$$RsBi_{sortie} = \frac{E\{(Si+B)_s\} - E\{B_s\}}{\sigma_{B_s}}$$

où,

$(S_i+B)_s$ fait référence aux sorties des voies signal i
$B_s$ fait référence à la sortie de la voie bruit de référence bruit seul

**Exemple de réalisation particulière**

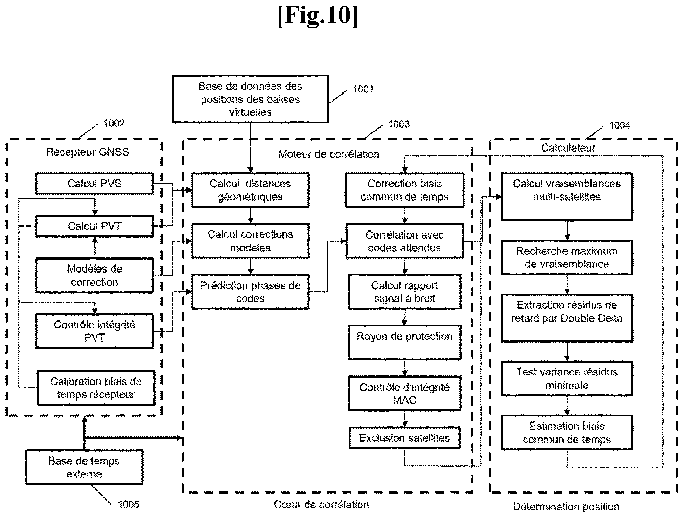

[Fig.10] décrit un mode de réalisation particulier, mais non limitatif, du contrôle de l'intégrité MAC dans le cas d'une détection sur une grille de positions de référence possibles.

De façon préférentielle, la présente réalisation trouve son application dans le domaine ferroviaire pour assurer l'intégrité de la position résolue d'un train, plus particulièrement au démarrage, parmi un ensemble de position de garage connues a priori, mais aussi en circulation pour permettre la détection de passage près de balises de référence.

La figure décrit l'architecture principale du dispositif de contrôle de l'intégrité de l'information de positionnement dans lequel ledit dispositif est configuré pour mettre en oeuvre le procédé de contrôle de l'intégrité selon les méthodes de l'invention pour les objectifs de Pnd et Pfa attendus.

(1002) est un récepteur GNSS, ici GPS, préférentiellement capable d'intégrer le traitement de toute constellation ou multi constellations, qui réalise les fonctions classiques de :

a. Calcul de PVS pour le calcul de la position des satellites à l'instant courant
b. Calcul du PVT pour une première estimation de la position et du temps, permettant de caler la recherche les balises dans ces fourchettes d'incertitude déterminées par les rayons de protections associés à la position et au temps
c. Calcul des modèles de correction pour le calcul du PVT, et paramétrage des calculs de modèle pour la détermination de position à l'affût

d. Contrôle de l'intégrité de la position et du temps calculés par le PVT par les algorithmes classiques du domaine GNSS (RAIM_FDE, ARAIM, RAIM-SBAS)

e. Calibration, si le récepteur dispose de canaux internes dédiés, des biais de retard interne du récepteur GNSS

(1003), dit Moteur de corrélation, présentant une architecture matérielle intégrée et dédiée, réalise les opérations de corrélation au plus près du signal, afin de réduire les latences ou les biais de synchronisation. Pour cela, ce module réalise au temps courant :

a. Le calcul des distances géométriques entre les satellites et les balises de référence,

b. Le calcul des modèles de correction associées à chacun des satellites

c. Le calcul des phases de codes attendues

d. La correction des biais de synchronisation commun

e. La génération de code local et la corrélation avec le signal reçu

f. Le calcul du rapport signal à bruit et la sélection des signaux présentant des **SNR suffisants**

g. Le contrôle de l'intégrité par la méthode MAC et l'exclusion de satellites biaisés

(1004) réalise les fonctions logicielles à plus basse cadence pour la détermination du maximum de vraisemblance, l'observation des résidus et l'estimation des biais communs.

(1001) est une base de données géographique à haute résolution (typiquement pour une résolution horizontale voisine du mètre) contenant les coordonnées des positions de référence géoréférencées et des trajectoires dans un référentiel compatible du référentiel WGS84 utilisé par GPS.

(1005) est une base de temps externe constituée d'une horloge atomique ultra-stable permettant le filtrage à long terme du temps local, ainsi que le maintien de la base de temps en cas de passage dans des zones occultées

L'ensemble de cette fonction est intégré dans un dispositif réalisant les procédés de l'invention, caractérisé en ce qu'il comprend :

a. une antenne,

b. un récepteur de positionnement adapté à l'acquisition et à la poursuite des signaux de référence en temps et en fréquence,

c. une base de temps, mesurant le temps courant, synchronisée sur le temps système d'émission des signaux par l'intermédiaire du récepteur de positionnement,

d. une cartographie géoréférencée de la trajectoire et des points de référence,

e. des moyens de calcul pour réaliser le traitement d'antenne et la détermination de position par détection d'un maximum de puissance de la fonction de corrélation

**Applications industrielles possibles de l'invention**

L'invention, appliquée au système de localisation ponctuelle, est adaptée à une mise en oeuvre à plus court horizon dans le domaine ferroviaire pour fournir une solution sécurisée (intègre dans un rayon de protection donné) pour la localisation au démarrage d'un train à l'arrêt d'un train sur une grille de positions de référence possibles, et pour la détermination de la date de passage d'un train parmi un ensemble de positions de référence, dites balises de référence virtuelles, disposées sur des lignes ferroviaires.

La mise en oeuvre du principe est aussi adaptée pour toutes formes de positionnement utilisant des routes contraintes à faible variation de dynamique tels que:

- Les systèmes de positionnement maritime dans les « rails » de navigation

- Les systèmes de communication et de navigation spatiaux sur orbites fixes

- Des systèmes terrestres de vérification de passages à des positions obligatoires, péages, douanes

- Les dispositifs de barrières virtuelles servant au confinement de mobiles ou de personnes dans des zones autorisées

**Liste des documents cités**

[D1] : Brevet FR 160 14 49 - Revol M. : « Procédé de localisation ponctuelle d'un véhicule évoluant sur une trajectoire contrainte et système associé », numéro de dépôt : 17194964.7, date de dépôt : 05.10.2017

[D2] : Brevet EP3751315 - Revol M. : « Procédé et système de localisation ponctuelle d'un véhicule à l'arrêt sur une voie de garage à l'aide de balises virtuelles » numéro de dépôt : EP20179133, date de dépôt : 10.06.2020

**Annexe : Formulation analytique de la solution**

On décrit ici une formulation analytique de l'algorithme de contrôle de l'intégrité et de ses réglages

Les caractéristiques recherchées de l'algorithme sont les suivantes :

- Réaliser la surveillance et l'exclusions (contrôle de l'intégrité) des signaux erronés qui seraient susceptibles de conduire à des erreurs de position du procédé CSG supérieures à un rayon d'alarme spécifié,

- Être adapté par construction à la surveillance des erreurs qui impactent le procédé CSG

- Fournir un rayon de protection adapté aux objectifs de sécurité imposé au système de navigation (au travers de ses caractéristiques de Pfa et de Pnd)

- Permettre de lever des risques spécifiques d'ambiguïté inhérents à la méthode de projection de la fonction de corrélation spatiale (indétermination de voie)

Dans un contexte où la méthode CSG permet, principalement, d'estimer, sur un critère de niveau de puissance reçue sur un ensemble de signaux, quelle est la position de balise de référence virtuelle la plus proche de la position actuelle du récepteur ou à quel instant le récepteur passe au plus près de cette position de référence, alors ;

- Le risque de non-intégrité de l'algorithme de contrôle de l'intégrité exprime l'incapacité du système de détecter qu'une mauvaise sélection de position de référence, identifiée par le procédé CSG comme la meilleure parmi les hypothèses de positions possibles, est en fait erronée avec un biais situé au-delà d'une distance minimum (rayon de protection) déterminée pour un indice de confiance donné par la probabilité de non-détection admissible de ce biais (Pnd)

- Le risque de non-continuité de l'algorithme de contrôle de l'intégrité exprime la capacité du système de détecter qu'une bonne position de position de référence identifiée par le procédé CSG comme la meilleure parmi les hypothèses de positions possibles, serait en fait détectée comme erronée pour un indice de confiance donné par la probabilité de fausse alarme admissible en absence de tout biais (Pfa)

- Le retard d'alarme (ou TTA) qui exprime le retard entre l'instant où un signal erroné s'est introduit dans l'algorithme de résolution de la position CSG et l'instant ou l'algorithme de surveillance de l'intégrité a pu le détecter.

**Hypothèse du risque d'erreur majorante :**

On définit H0 et H1 les 2 états de l'hypothèses sur la présence de biais de mesures pour une position de référence donnée :

- H0 : aucune des mesures n'est affectée d'un biais (seule existe une erreur de bruit aléatoire centré, de même répartition pour tous les observables)

- H1 : au moins une mesure est affectée d'un biais (supposé suffisante pour pouvoir perturber la décision)

On définit aussi les états estimés qui résultent de la décision (du procédé de contrôle de l'intégrité MAC) :

- $\widehat{H0}$ ; décision du test de contrôle de l'intégrité que « la position de référence est la bonne » (aucun des signaux reçus, et utilisé pour le positionnement CSG, n'est affecté par un biais)

- $\widehat{H1}$ ; décision du test de détection que « la position de référence n'est pas la bonne » (au moins un des signaux reçus, et utilisé pour le positionnement CSG, est affecté par un biais)

La probabilité de fausse alarme du test est liée au niveau du seuil de détection en regard de la distribution statistique de l'erreur de bruit en sortie du détecteur, sous l'hypothèse d'une absence de tout biais.

La probabilité de non-détection du test est liée au niveau du seuil de détection en regard de la distribution statistique de l'erreur du signal additionné au bruit en sortie du détecteur, sous l'hypothèse de l'existence d'un biais.

Ainsi, minimiser le coût de fausse décision revient à réduire la Pfa, indicatrice de la réduction à tort de la continuité du service de positionnement, et la Pnd , indicatrice de la perte d'intégrité du service de positionnement, l'impact de la perte d'intégrité ayant généralement un impact catastrophique sur le service de navigation critiques alors que l'impact de la perte de continuité n'a plutôt qu'un impact majeur.

- Pfa représente la probabilité $p(\widehat{H1}/H0)$ :

- Pnd représente la probabilité $p(\widehat{H0}/H1)$

On adopte une approche conservatoire selon un principe d'erreur majorante tel que :

- dès l'occurrence d'une fausse alarme sur un seul axe satellite, alors le contrôle de l'intégrité peut rejeter à tort la position correcte de la position de référence

- dès l'occurrence d'une non détection de biais sur un seul axe satellite, alors le contrôle de l'intégrité peut retenir à tort la position incorrecte de la balise de référence virtuelle

Ces états de décision (impact majorant de l'erreur) sont très conservateurs car la détection d'un ou plusieurs signaux biaisés ne suffit pas forcément à entraîner une mauvaise décision sur la détermination de la position de référence (dépend de la combinaison de ces biais), ni que la non-détection d'un seul biais soit suffisante pour affirmer que la position de référence ne soit pas la bonne.

Ce principe implique d'appliquer le contrôle de l'intégrité MAC par axe sur tous les satellites visibles, et d'exclure les satellites selon le critère du MAC, pour chaque hypothèse explorée de position des positions de références.

Cette approche majorante implique aussi que les risques de non-intégrité et de non-continuité tolérés pour le contrôle de l'intégrité au niveau position de référence soient divisés par le nombre de satellites visibles pour ramener et réaliser le contrôle de l'intégrité au niveau de chaque satellite.

**Signal objet du contrôle de l'intégrité par MAC**

CSG réalise en temps réel, pour chaque signal satellite et chaque position de balise de référence virtuelle, une corrélation entre le signal reçu par le récepteur dont on ne connaît pas la position, et une copie du signal attendu adapté en phase code, au temps courant, avec chaque position connue des positions de références virtuelles.

MAC utilise toutes les sorties de filtrage adapté à chacune des positions de références virtuelles et à chaque satellite pour réaliser le contrôle de l'intégrité.

Sous l'hypothèse H0, l'expression du signal de sortie de corrélation s'écrit :

$$\Gamma_{H0}(\mathrm{Sk}, \mathrm{Bl}) = \int_{Tint} S_k(t).C_k^*(t - \tau_{Bl})dt + \int_{Tint} N(t).C_k^*(t - \tau_{Bl})dt \ (\mathrm{f.1})$$

Sous l'hypothèse H1, l'expression du signal de sortie de corrélation s'écrit :

$$\Gamma_{H1}(\mathrm{Sk}, \mathrm{Bl}) = \int_{Tint} S_k(t - \tau_{biais}).C_k^*(t - \tau_{Bl})dt + \int_{Tint} N(t).C_k^*(t - \tau_{Bl})dt \ (\mathrm{f.2})$$

Où,

Sk désigne le satellite k
Bl désigne la position de référence l
$\tau_{Bl}$ désigne l'écart de phase de code entre le signal Sk reçu sur le récepteur et le signal attendu sur la position de référence Bl
$\tau_{biais}$ désigne le biais de retard affectant le signal Sk reçu par le récepteur

Avant toute autre détection, le signal de sortie de filtrage adapté est un signal complexe (I &Q) représentatif de l'amplitude et de la phase reçues, et non d'une puissance. La durée d'intégration cohérence détermine la bande passante équivalente dans laquelle est observée la sortie du filtrage adapté.

Dès qu'une détection quadratique est réalisée sur ces sorties, le rapport signal à bruit reflète alors de rapport entre la puissance du signal reçu pour le retard de corrélation correspondant à la position de la balise de référence virtuelle (sous l'hypothèse H1) et la puissance du bruit seul dans la bande d'observation (sous l'hypothèse H0) ; le rapport signal à bruit après intégration non cohérente augmente comme la racine carrée du nombre d'échantillon de l'intégration quadratique.

La durée d'intégration cohérente détermine donc la bande passante d'estimation de la puissance du bruit (supposé blanc), et la durée d'intégration non cohérente détermine le gain supplémentaire sur le rapport signal à bruit dans cette bande (RSB) ainsi que la latence introduite par l'algorithme de contrôle de l'intégrité.

**Expression de la Pfa associée à l'algorithme MAC**

Conformément à l'hypothèse d'erreur majorante, le contrôle de l'intégrité est réalisé par axe satellite, les axes satellites détectés erronés étant éliminés du calcul du maximum de corrélation réalisé par CSG pour chaque hypothèse de position de balise de référence virtuelle.

Sous l'hypothèse H0 (pas de biais de mesure), et en se plaçant dans le cas de la position de référence la plus proche de la position du récepteur, alors, la Pfa par satellite représente la probabilité que l'algorithme MAC puisse ne pas détecter un maximum au centre des 2 points de corrélation avancé (E) et retardé (L) qui encadrent la voie de corrélation ponctuelle (P) après filtrage adapté entre le signal reçu et chacun des signaux satellites retardés de la phase de code correspondant à la position de la position de référence.

Soient,

- P(Sk,Bl), la puissance de la voie ponctuelle en sortie CSG pour le signal $S_k$ et la position de référence $B_l$
- E(Sk,Bl), la puissance de la voie avance
- L(Sk,Bl), la puissance de la voie retard

Alors , la probabilité de fausse alarme par satellite s'exprime comme,

$$Pfa = p\{\big(P(Sk, Bl) < \mathrm{E}(\mathrm{Sk}, \mathrm{Bl})\big) \cup \big(P(Sk, Bl) < \mathrm{L}(\mathrm{Sk}, \mathrm{Bl})\big)\} \text{ (f.3)}$$

$$Pfa = p\{\big(P(Sk, Bl) < \mathrm{E}(\mathrm{Sk}, \mathrm{Bl})\big)\} + p\{\big(P(Sk, Bl) < \mathrm{L}(\mathrm{Sk}, \mathrm{Bl})\big)\} \text{ (f.4)}$$

La figure 4 présente une illustration d'occurrence du risque de fausse-alarme

En retenant l'hypothèse de symétrie de la fonction de corrélation dans le cas où la sélection de la balise de référence virtuelle est correcte, ceci pour réduire l'expression analytique, alors *(E(Sk, Bl)* = L(Sk, Bl)) soit :

$$Pfa = 2.p\{\big(P(Sk, Bl) < \mathrm{E}(\mathrm{Sk}, \mathrm{Bl})\big)\} = 2.p\{\big(\mathrm{E}(\mathrm{Sk}, \mathrm{Bl}) - P(Sk, Bl)\big) > 0\} \text{ (f.5)}$$

En écrivant,

$$\mathrm{P}(\mathrm{Sk}, \mathrm{Bl}) = \int_{Tint} S_k(t).C_k^*(t - \tau_{Bl})dt + \int_{Tint} N(t).C_k^*(t - \tau_{Bl})dt \text{ (f.6)}$$

$$\mathrm{E}(\mathrm{Sk}, \mathrm{Bl}) = \int_{Tint} S_k(t).C_k^*(t - \tau_{Bl} - \tau_0)dt + \int_{Tint} N(t).C_k^*(t - \tau_{Bl} - \tau_0)dt \text{ (f.7)}$$

En posant ;

$$m_E = \overline{\mathrm{E}_{S+N}(\mathrm{Sk,Bl})} \quad = \overline{\int_{Tint} S_k(t).C_k^*(t - \tau_{Bl} - \tau_0)dt} + \overline{\int_{Tint} N(t).C_k^*(t - \tau_{Bl} - \tau_0)dt}$$
(f.8)

la moyenne en présence de signal et de bruit en sortie de corrélation (pour la voie avance)

$$m_N = \overline{\mathrm{E}_N(\mathrm{Sk,Bl})} = \overline{\int_{Tint} N(t).C_k^*(t - \tau_{Bl} - \tau_0)dt} \quad \text{(f.9)}$$

la moyenne en présence de bruit seul en sortie de corrélation (pour la voie avance)

$$Sigma_E^2 = \overline{(\mathrm{E}_{S+N}(\mathrm{Sk,Bl}) - m_E)^2} \quad \text{(f.10)}$$

la variance centrée en présence de signal et de bruit seul en sortie de corrélation.

$$Sigma_N^2 = \overline{(\mathrm{E}_N(\mathrm{Sk,Bl}) - m_N)^2} \quad \text{(f.11)}$$

la variance centrée en présence de bruit seul en sortie de corrélation.

Le bruit N(t) en sortie de corrélation étant centré et indépendant du signal

$$m_E = A_{Sk}.\Gamma_{Ck}(\tau_{Bl} + \tau_0) \quad \text{(f.12)}$$

où,

$A_{Sk}$, représente l'amplitude du signal $S_k$
$\Gamma_{Ck}(\tau_{Bl} + \tau_0)$, représente le niveau de la fonction de corrélation du code d'étalement du signal pour le retard ($\tau_{Bl} + \tau_0$)

$$Sigma_E^2 = Sigma_N^2 = \Gamma_N(0).\Gamma_{Ck}(0) \quad \text{(f.13)}$$

On exprime de la même façon,

$$m_P = \overline{\int_{Tint} S_k(t).C_k^*(t - \tau_{Bl})dt} + \overline{\int_{Tint} N(t).C_k^*(t - \tau_{Bl})dt} = A_{Sk}.\Gamma_{Ck}(\tau_{Bl}) \text{ (f.14)}$$

$$Sigma_P^2 = Sigma_N^2 = \Gamma_N(0).\Gamma_{Ck}(0) \quad \text{(f.15)}$$

D'où , en posant $\Delta_{EP}$= E(Sk, Bl) - P(Sk, Bl) ;

$$m_{\Delta_{EP}} = m_E - m_P = A_{Sk}.\left(\Gamma_{Ck}(\tau_{Bl} + \tau_0) - \Gamma_{Ck}(\tau_{Bl})\right) = A_{Sk}.\left(\frac{\Gamma_{Ck}(\tau_{Bl}+\tau_0)}{\Gamma_{Ck}(\tau_{Bl})} - 1\right).\Gamma_{Ck}(\tau_{Bl}) \text{ (f.16)}$$

$$Sigma_{\Delta_{EP}}{}^2 = Sigma_E{}^2 + Sigma_P{}^2 = 2.Sigma_N{}^2 = 2.\Gamma_N(0).\Gamma_{Ck}(0) \text{ (f.17)}$$

En prenant l'hypothèse que, pour la détermination de la probabilité de fausse alarme, la position de référence la plus probable au sens du maximum de vraisemblance est proche de la position vraie du récepteur, alors :

$$\Gamma_{Ck}(\tau_{Bl}) \approx \Gamma_{Ck}(0)$$

$$\Gamma_{Ck}(\tau_{Bl} + \tau_0) \approx \Gamma_{Ck}(\tau_0)$$

D'où ;

$$m_{\Delta_{EP}} \approx A_{Sk}.\left(\frac{\Gamma_{Ck}(\tau_0)}{\Gamma_{Ck}(0)} - 1\right).\Gamma_{Ck}(0) \text{ (f. 18)}$$

$$\sigma^2_{\Delta_{EP}} = Sigma_{\Delta_{EP}}{}^2 = 2.Sigma_N{}^2 = 2.\Gamma_N(0).\Gamma_{Ck}(0) \text{ (f.19)}$$

La puissance du code local est normalisée en puissance ;

$$\Gamma_{Ck}(0) = 1$$

D'où,

$$m_{\Delta_{EP}} \approx A_{Sk}.\left(\frac{\Gamma_{Ck}(\tau_0)}{\Gamma_{Ck}(0)} - 1\right) \text{ (f.20)}$$

$$\sigma^2_{\Delta_{EP}} = 2.\Gamma_N(0) \text{ (f.21)}$$

D'où, sous l'hypothèse d'un bruit Gaussien,

$$Pfa = 2.p\left\{\left(E(Sk, Bl) - P(Sk, Bl)\right) > 0\right\}$$

$$= 2.\int_0^\infty \frac{1}{\sqrt{2\pi}\sigma_{\Delta_{EP}}} \exp\left(-\frac{(x - m_{\Delta_{EP}})^2}{2\sigma_{\Delta_{EP}}^2}\right).dx$$

$$= 1 - \text{erf}\left(\frac{|m_{\Delta_{EP}}|}{\sqrt{2}\,\sigma_{\Delta_{EP}}}\right) = 1 - erf\left(\frac{A_{Sk}\left(1 - \frac{\Gamma_{Ck}(\tau_0)}{\Gamma_{Ck}(0)}\right)}{2\sqrt{\Gamma_N(0)}}\right) = 1 - erf\left(\frac{\sqrt{SNR_k\left(1 - \frac{\Gamma_{Ck}(\tau_0)}{\Gamma_{Ck}(0)}\right)}}{2}\right) \quad \text{(f.22)}$$

Ce résultat représente la Pfa atteignable en sortie d'intégration cohérente simple de la fonction de corrélation (par exemple sur 20ms) et dans le cas d'un rapport signal à bruit RSB reçu dans la bande d'intégration cohérente, avec :

- $RSB_k = \frac{C_k}{N_0}.T_c$ , est le rapport signal à bruit post-correlation pour le satellite k estimé dans une bande 1/Tc , liée à la durée d'intégration cohérente

- $\left(1 - \frac{\Gamma_{Ck}(\tau_0)}{\Gamma_{Ck}(0)}\right)$ représente le différentiel de niveau de la fonction de corrélation du code (en puissance) lié à l'écartement entre les points de corrélation avance et ponctuel (identique aussi à l'écart entre ponctuel et retard). Ce différentiel est d'autant plus marqué que l'étalement spectral du code est important.
- C/N0, est le rapport signal à bruit du signal reçu dans 1 Hz (supposant, pour l'estimation de la Pfa, la position de référence à proximité de la position réelle du récepteur)
- Tc est la durée d'intégration cohérente

En cas d'intégration non cohérente supplémentaire ($T_{Nc}$,) le rapport signal à bruit RSB sera augmenté en 5log ($T_{Nc}/T_c$).

L'expression de la probabilité de fausse alarme par signal satellite devient alors :

$$Pfa = 1 - erf\left(\frac{\sqrt{SNR_k.\sqrt{\frac{T_{NC}}{T_c}}\left(1 - \frac{\Gamma_{Ck}(\tau_0)}{\Gamma_{Ck}(0)}\right)}}{2}\right) \quad \text{(f.23)}$$

La probabilité de fausse alarme globale en position exprimant la réjection à tort d'une position valide par le contrôle de l'intégrité, lorsque au moins un des signaux est déclaré erroné, devient alors ;

$$Pfa = N_{sat}.\left(1 - erf\left(\frac{\sqrt{SNR_k.\sqrt{\frac{T_{NC}}{T_c}}\left(1 - \frac{\Gamma_{Ck}(\tau_0)}{\Gamma_{Ck}(0)}\right)}}{2}\right)\right) \quad \text{(f.24)}$$

où, $N_{sat}$ est le nombre de satellites pris en compte pour la détection de la position.

**Expression de la Pnd associée à l'algorithme MAC**

Sous l'hypothèse H1 (présence d'un biais de mesure), et en se plaçant dans le cas d'une position de référence éloignée de la position du récepteur, alors, la Pnd représente la probabilité que l'algorithme MAC puisse détecter quand même un maximum au centre des 2 points de corrélation avancé (E) et retardé (L) qui encadrent la voie de corrélation ponctuelle (P) après filtrage adapté entre le signal reçu et chacun des signaux satellites retardés de la phase de code correspondant à la position de référence éloignée.

Soient,

- P(Sk,Bl), la puissance de la voie ponctuelle en sortie CSG pour le signal $S_k$ et la position de référence $B_l$
- E(Sk,Bl),, la puissance de la voie avance
- L(Sk,Bl),, la puissance de la voie retard

Alors,

$$Pnd = p\{(P(Sk, Bl) > \mathrm{E(Sk, Bl)}) \cap (P(Sk, Bl) > \mathrm{L(Sk, Bl)})\} \text{ (f.25)}$$

$$Pnd = p\{(P(Sk, Bl) > \mathrm{E(Sk, Bl)})\}.p\{(P(Sk, Bl) > \mathrm{L(Sk, Bl)})\} \text{ (f.26)}$$

La figure 5 présente une illustration d'occurrence du risque de non-détection

En retenant l'hypothèse pour réduire la complexité que les voies E,P, L sont distribuées sur un seul des côtés de la fonction de corrélation, par exemple que E, P, L correspondent à des puissances croissantes, alors :

$$E(Sk, Bl) < \mathrm{P(Sk, Bl)} \Rightarrow 1 > p(P(Sk, Bl) > \mathrm{E(Sk, Bl)}) > 0.5$$

Le même raisonnement peut être appliqué si le décalage apparait dans l'autre sens, correspondant à des puissance E,P, L décroissantes (les deux situations symétriques pouvant apparaitre avec une égale probabilité d'occurrence de 0,5, on ne développe qu'un cas de décalage avec une probabilité de 1)

Soit,

$$p\{(P(Sk, Bl) > \mathrm{L(Sk, Bl)})\} > Pnd > \frac{1}{2}.p\{(P(Sk, Bl) > \mathrm{L(Sk, Bl)})\} \text{ (f.27)}$$

$$p\{(P(Sk, Bl) > \mathrm{L(Sk, Bl)})\} > Pnd \text{ (f.28)}$$

Suivant la même approche que pour la détermination de l'expression de la Pfa,

$$p\{(P(Sk, Bl) > \mathrm{L(Sk, Bl)})\} = p\{(P(Sk, Bl) - \mathrm{L(Sk, Bl)}) > 0\} \text{ (f.29)}$$

et

$$p\{(P(Sk, Bl) - \mathrm{L(Sk, Bl)}) > 0\} = \int_0^\infty \frac{1}{\sqrt{2\pi}\sigma_{\Delta PL}} \exp\left(-\frac{(x - m_{\Delta PL})^2}{2\sigma_{\Delta PL}^2}\right).dx \text{ (f.30)}$$

avec

$$m_{\Delta PL} = m_P - m_L = A_{Sk}.(\Gamma_{Ck}(\tau_{Bl} + \tau_0) - \Gamma_{Ck}(\tau_{Bl})) = A_{Sk}.\left(\frac{\Gamma_{Ck}(\tau_{Bl}+\tau_0)}{\Gamma_{Ck}(\tau_{Bl})} - 1\right).\Gamma_{Ck}(\tau_{Bl})$$

(f.31)

$$Sigma_{\Delta_{PL}}{}^2 = Sigma_P{}^2 + Sigma_L{}^2 = 2.Sigma_N{}^2 = 2.\Gamma_N(0).\Gamma_{Ck}(0) \quad \text{(f.32)}$$

Contrairement à l'expression de la Pfa, où il était supposé une absence de biais, donc une proximité de la position de référence avec la position réelle du récepteur qui autorisait à retenir l'hypothèse que $\tau_{Bl}$ était petit devant le support de corrélation du code, et donc que $\Gamma_{Ck}(\tau_{Bl}) \approx \Gamma_{Ck}(0)$, ceci n'est plus autorisé sans précaution préalable dans le cas du calcul de la Pnd.

Dans le cas de la Pnd, on suppose qu'il existe bien un biais et on évalue le risque de ne pas l'identifier. Ce biais de position du maximum de corrélation peut être situé a priori à n'importe quelle distance de la position réelle du récepteur, mais quand même limitée à la distance de corrélation d'un chip de code $1\mu$s dans le cas GPS C/A (300m).

Une difficulté liée au traitement de signaux fortement biaisés serait que le niveau de leur corrélation avec le code local serait forcément faible (du fait du biais important), et donc d'autant plus susceptible de générer des non-détections à faible rapport à bruit.

L'approche retenue pour pallier ce problème est de ne sélectionner que des signaux à rapport signal à bruit suffisamment élevés donc présentant des biais assez faibles et susceptible de n'entrainer qu'un nombre limité de non-détections liées à une trop grande dispersion du bruit de corrélation.

Ce seuil sur le rapport signal à bruit doit être défini dans la bande d'intégration cohérente de la fonction de corrélation.

Par exemple, si on retient un CN0 théorique nominal de 43dB/Hz, le RSB dans 50Hz n'est plus que de 43-17=26dB, et en prenant une hypothèse de facteur de bruit (NF) de -3dB en entrée du récepteur, le seuil de détection du RSB minimum ne serait alors plus que de 23dB (sans compter d'éventuelles intégrations non cohérentes qui pourraient permettre de remonter le RSB).

Sous cette hypothèse on peut à nouveau faire l'hypothèse que $\Gamma_{Ck}(\tau_{Bl}) \approx \Gamma_{Ck}(0)$ et donc appliquer pour le calcul de Pnd par axe satellite une expression équivalente à celle de la Pfa :

$$Pnd < p\{(P(Sk, Bl) - L(Sk, Bl)) > 0\} \quad \text{(f.33)}$$

$$Pnd < 0{,}5.\left(1 - \text{erf}\left(\frac{|m_{\Delta_{PL}}|}{\sqrt{2}\,\sigma_{\Delta_{PL}}}\right)\right) = 0{,}5.\left(1 - erf\left(\frac{A_{Sk}\left(1 - \frac{\Gamma_{Ck}(\tau_0)}{\Gamma_{Ck}(0)}\right)}{2\sqrt{\Gamma_N(0)}}\right)\right) = 0{,}5.\left(1 - \right.$$

$$\left. erf\left(\frac{\sqrt{SNR_k\left(1 - \frac{\Gamma_{Ck}(\tau_0)}{\Gamma_{Ck}(0)}\right)}}{2}\right)\right) \text{(f.34)}$$

La probabilité de non détection d'erreur globale de position est directement reprise de cette expression de la Pnd par signal, sachant qu'on s'intéresse ici, non pas aux pannes satellites _qui devraient être alors considérées comme équiprobables, mais avec un taux d'occurrence très faible ($\sim$10$^{-4}$/h)_ , mais aux biais des signaux créés par l'environnement proche _ considérés comme certains avec un taux d'occurrence de 1_ décrit, sous l'hypothèse du risque d'erreur majorante, tels que « au moins une mesure est affecté d'un biais » (quel que soit le satellite), sachant que en condition réelle, plusieurs signaux satellites sont généralement affectés simultanément par la présence de trajets multiples ou des interférences, estimant ainsi une majoration du risque de non détection.

**Calcul du rayon de protection associé au MAC**

Le rayon de protection (RP) définit le niveau minimal de l'erreur de position en dessous de laquelle la barrière, utilisée pour réaliser le contrôle d'intégrité, ne peut réussir à détecter l'existence de biais de mesures élémentaires conduisant à cette erreur de position avec la confiance souhaitée et le délai d'alerte souhaité.

Le rayon de protection en position est donc représentatif de la zone aveugle de couverture du test de détection des biais, et donc du domaine d'erreur en position pour laquelle il n'est pas possible d'assurer une surveillance de l'intégrité de la détermination de position. On considère que le risque de non-intégrité de la position ne peut pas être couvert par le procédé de contrôle de l'intégrité en dessous de cette erreur minimale, et que seules les erreurs de plus grande amplitude peuvent être identifiées par les barrières mises en place.

Le seuil de détection de la barrière de contrôle des défauts au niveau des signaux satellites individuels est ainsi déterminé par la capacité à détecter des défauts susceptibles d'entrainer une erreur de sélection de la position de référence au minimum égales au rayon de protection.

Dans le cas de l'algorithme MAC, RP est dérivé du seuil de détection ($t_0$) en considérant la possibilité que des positions de références différentes de la position de référence la plus proche soient malgré tout retenues par un test de maximum de vraisemblance et en respectant simultanément la zone de non-couverture (dites zones aveugles) en retard du test MAC.

Cette extension du domaine d'ambiguïté des positions sélectionnées par maximum de vraisemblance est définie par l'intersection des couronnes d'indétermination des plans d'ondes des signaux, définies par la zone aveugle $\tau_0$ du test de détection de la barrière de détection de l'algorithme MAC, projetées sur le plan horizontal.

Le domaine de recouvrement des couronnes aveugles de 2 plans d'onde de satellites séparés par un angle incidence $\Delta\alpha$ est étiré au maximum en fonction de $\left(\frac{1}{\sin(\Delta\alpha)}\right)$, indiquant en cela que le domaine d'ambiguïté au croisement des plans d'onde devient très important si l'écart angulaire séparant les deux axes satellites est faible.

En présence d'au moins un 3ième satellite, de puissance de réception équivalente aux 2 premiers et suffisamment séparé en angle d'incidence, les zones d'ambiguïtés, liées à la superposition des couronnes aveugles de synchronisation des plans d'onde des 2 premiers, sont résorbées par l'algorithme du maximum de vraisemblance, qui parmi les positions de référence possible de retiendra que celle compatibles du croisement des 3 plans d'onde.

Ainsi, lorsque au moins 3 satellites, présentant un rapport signal à bruit suffisant, sont utilisables par le maximum de vraisemblance pour évaluer un ensemble de positions de références possibles, alors la zone d'ambiguïté de position résulte de la plus petite extension de tous les couples d'intersection possibles.

Sous l'hypothèse que au moins 3 satellites sont visibles simultanément, et que tous sont sélectionnés par la barrière de détection du MAC, alors une expression majorante du rayon de protection en position sur le plan horizontal pour cette plus petite extension est donnée par :

$$RP = \tau_0 \times min_{(i,j)\epsilon Ns \times Ns} \left[\left(\frac{1}{\cos(El_i)} \times \frac{1}{\cos(El_j)}\right) \times \frac{1}{\sin(Az_i - Az_j)}\right] \text{(f.35)}$$

où,

- $\tau_0$ est le décalage des voies avance et retard de la barrière de détection du MAC
- Ns représente l'ensemble des satellites sélectionnés par l'algorithme MAC
- (i,j) est un couple d'indice i et j parmi ces satellites
- $Az_i$ est l'angle d'incidence en azimut (par rapport au nord) du signal satellite i
- $El_i$ est l'angle d'incidence en élévation (par rapport au plan horizontal) du signal satellite i

Dans le cas du contrôle de l'intégrité du PVT utilisé dans des solutions aéronautiques, on ne retient que des erreurs qui sont liées à des pannes satellites et non détectées par le système GNSS, et il est supposé que l'environnement local et le récepteur lui-même sont suffisamment bien défini et contrôlés par ailleurs pour qu'il ne soit pas nécessaire de les surveiller. Le RAIM s'intéresse donc à des pannes satellites uniques et rares (#$10^{-4}$ occurrence /heure), dont le taux d'occurrence participe par lui-même à viser des risques de non-intégrité très faibles de l'ordre de $10^{-7}$ par heure ; dans ces cas la probabilité de non détection de l'algorithme de contrôle de l'intégrité RAIM reste à un niveau raisonnable de l'ordre de $10^{-3}$.

Ce n'est plus le cas de solutions de navigations adaptées à la navigation terrestre, puisque de multiples sources d'erreurs peuvent cohabitées simultanément.

Les trajets multiples liés à l'environnement local proche du récepteur sont particulièrement redoutables pour les applications de navigation terrestres, et en particulier pour le rail, si on considère qu'il n'est pas possible de les prédire avec suffisamment de confiance dans toutes les situations.

Contrairement à des pannes résiduelles du système GNSS, l'occurrence de biais de mesures dus aux trajets multiples peut être important, et l'incertitude sur leur possible apparition sur plusieurs axes satellites à la fois conduit à retenir l'hypothèse d'un taux d'occurrence égal à 1, et donc à faire porter toute la capacité de contrôle d'intégrité sur la surveillance locale des erreurs de mesures. La prédiction de la performance de cette surveillance s'arrête donc à la validité des distribution statistiques des erreurs, qui peuvent difficilement être modélisées pour les queues de distribution, notamment pour la détection d'évènement rares qu'il est difficile de faire rentrer dans des modèles statistiques.

Pour cela, il sera difficile de traiter des risques de non-intégrité inférieur à disons, $10^{-5}$, ce qui implique de rechercher des solutions de niveau système et non plus équipement, par exemple par de la redondances dissimilaire.

Ainsi, basé sur l'expression de la Pnd

$$Pnd < 0,5.\left(1 - erf\left(\frac{\sqrt{SNR_k\left(1 - \frac{\Gamma_{Ck}(\tau_0)}{\Gamma_{Ck}(0)}\right)}}{2}\right)\right) \text{ (f.36)}$$

La démarche pour le calcul du rayon de protection est la suivante :

a. On définit le risque de non-intégrité alloué à l'équipement de navigation

b. On en déduit la probabilité de non-détection à attribuer au module de contrôle de l'intégrité (MAC) compte tenu du taux d'occurrence estimé ou évalué des erreurs

c. On définit le rapport signal à bruit RSB satellite minimum à surveiller

d. On détermine le rapport de discrimination (ou « contraste ») minimum (1- $\frac{\Gamma_{Ck}(\tau_0)}{\Gamma_{Ck}(0)}$ que doit fournir le code d'étalement utilisé par le contrôle de l'intégrité MAC

e. Compte tenu de la forme imposé de la fonction de corrélation spatiale, on détermine l'écartement minimum entre les points de corrélation du contrôle de l'intégrité MAC. Cette distance dépend essentiellement :

    i. De la bande d'étalement du code, qui diffère d'une constellation à une autre, voire d'une fréquence à une autre (ie Galileo/ GPS, ou E1/E5)

    ii. De la bande passante du récepteur qui doit être la plus large possible pour pouvoir bénéficier de l'étalement des codes et pour pouvoir atteindre des résolutions spatiales de quelques mètres ; par exemple une résolution 6m (20ns) implique une bande passante de réception d'au moins 50 MHz

f. A partir de l'écartement entre les échantillons de corrélation de la barrière de détection de biais au niveau satellite, on calcule le rayon de protection en position, si au moins 3 satellites sont visibles simultanément, selon l'expression (f.35).

La figure 6 présente le principe de réglage de la méthode MAC.

Le principe de réglage permet d'ajuster le rayon de protection avec les risques de non-intégrité et de non-continuité requis pour le procédé de contrôle au cours de laquelle :

(1) La Pnd attendue du monitoring par satellite est dérivée du risque de perte d'intégrité fixé au niveau de l'équipement

(2) Le contraste de corrélation objectif par satellite, défini par le produit $SNR_k.\sqrt{\frac{T_{NC}}{T_c}}\left(1 - \frac{\Gamma_{Ck}(\tau_0)}{\Gamma_{Ck}(0)}\right)$ est déduite de la valeur de Pnd attendue selon la formulation analytique (f.34)

(3) La Pfa attendue du monitoring par satellite est dérivée du risque de perte de continuité fixé au niveau de l'équipement selon la formule (f.24) fournie en annexe

(4) La durée d'intégration cohérente et non cohérente est déterminée à partir du TTA fixé au niveau de l'équipement

(5) Le seuil de rapport signal à bruit minimum correspondant à la durée d'intégration cohérente et non cohérente est calculé à partir d'une valeur nominale du CN0 minimum garanti des signaux GNSS en réception

(6) Le retard minimum entre la voie ponctuelle et les voies avance et retard, définissant le rayon de protection du contrôle de l'intégrité est déduit du contraste de corrélation objectif, du seuil sur le rapport signal à bruit minimum calculé et de la largeur de chip du code PRN du signal selon la démarche décrite en annexe, basée sur la formule (f.36)

(7) La Pfa objective du contrôle de l'intégrité est calculée à partir du contraste de corrélation objectif selon la formulation analytique (f.24) donnée en annexe

(8) Si la Pfa objective est inférieure à la Pfa attendue, le retard entre voies avance-ponctuel-retard définit le rayon de protection du contrôle de l'intégrité

(9) Si le rayon de protection du contrôle de l'intégrité est supérieur au rayon d'alarme limite toléré pour le service de positionnement, le contrôle de l'intégrité du système de positionnement est déclaré irréalisable pour les objectifs de Pnd et Pfa attendus

(10) Si la Pfa objective est supérieure à la Pfa attendue,

(a) la durée d'intégration cohérente en sortie de filtrage adaptée est progressivement augmentée jusqu'à une durée égale au TTA, de sorte à optimiser le rapport signal à bruit de sortie après filtrage adapté $SNR_k \cdot \sqrt{\frac{T_{NC}}{T_c}}$

(b) Les Pfa et Pnd objectives sont recalculées avec le nouveau rapport signal à bruit de sortie, sans modification du rayon de protection du contrôle de l'intégrité, selon les formulations analytiques fournies en annexe

(c) Si la Pfa objective recalculée reste supérieure à la Pfa attendue, le contrôle de l'intégrité du système de positionnement est déclaré irréalisable pour les objectifs de Pnd et Pfa attendus

## Exemple de performances et réglages

On décrit ici un cas d'application du calcul de rayon de protection selon différents réglages de temps d'intégration :

En supposant un risque de non-intégrité égal à la probabilité de non détection ; Pnd=$10^{-5}$

Alors on déduit,

$$\text{Erf}_c(2.10^{-5}) = 3,01 = \frac{\sqrt{SNR_k \left(1 - \frac{\Gamma_{Ck}(\tau_0)}{\Gamma_{Ck}(0)}\right)}}{2}$$

D'où,

$$\sqrt{SNR_k \left(1 - \frac{\Gamma_{Ck}(\tau_0)}{\Gamma_{Ck}(0)}\right)} = 6,02$$

$$SNR_k \left(1 - \frac{\Gamma_{Ck}(\tau_0)}{\Gamma_{Ck}(0)}\right) = 36,24$$

En retenant un rapport signal à bruit dans la bande de 50Hz de 26dB (=10log (RSB))

$$RSB = 400$$

$$\left(1 - \frac{\Gamma_{Ck}(\tau_0)}{\Gamma_{Ck}(0)}\right) = 0,0906$$

D'où on déduit, pour un code C/A d'étalement de 300, un rayon de protection de 27m

Une augmentation de la durée d'intégration non cohérente jusqu'à 3 secondes correspondant au rythme de fourniture de la position par CSG en statique procure une gain de 5log ($T_{Nc}/T_c$) =5log (3/0,02) #11dB

Soit, un RSB après intégration cohérente de 26+11=37dB,

Ou encore, RSB=5011 en valeur naturelle

Ce qui implique,

$$\left(1 - \frac{\Gamma_{Ck}(\tau_0)}{\Gamma_{Ck}(0)}\right) = 7{,}2 \times 10^{-3}$$

Soit encore un rayon de protection en GPS C/A de 2,2m

**Revendications**

1. L'invention décrit un procédé de contrôle de l'intégrité associé à la méthode de localisation par détermination de la position au plus près d'un ensemble de positions de références prédéfinies, pour mise en oeuvre sur porteur mobile ou fixe, le dit procédé permettant de vérifier que la fonction de corrélation des signaux GNSS reçus est cohérente de la position de référence sélectionnée, ledit procédé étant **caractérisé en ce qu'**il comporte :

   (a) Une étape E1 (100) de synchronisation de la base de temps du procédé sur le temps GNSS calculé et transmis par le système de positionnement GNSS
   (b) Une étape E2 (101) de calcul de la phase de code des signaux GNSS prédits en réception pour l'ensemble desdites positions de références et pour l'ensemble des satellites visibles auxdites positions de référence
   (c) Une étape E3 (103) de calcul du rapport signal à bruit dans la bande d'observation après filtrage adapté des signaux GNSS reçus avec lesdits signaux GNSS prédits
   (d) Une étape E4 (104) de détermination conjointe du rayon de protection minimum ($RP_0$) et de la durée d'intégration du traitement adaptés aux risques de non-intégrité et non continuité requis, ledit rayon de protection minimum étant déterminé en fonction du retard minimum ($\tau_0$) entre la voie de corrélation ponctuelle et les voies de corrélation avance et retard, caractéristique du test de détection des défauts appliqué sur les signaux satellites individuels, et d'un coefficient de dilution géométrique dépendant de la répartition spatiale des signaux reçus, défini selon l'expression :

$$RP_0 = \tau_0 \times min_{(i,j)\epsilon Ns \times Ns}\left[\left(\frac{1}{\cos(El_i)} \times \frac{1}{\cos(El_j)}\right) \times \frac{1}{\sin(Az_i - Az_j)}\right]$$

   où,

   $\tau_0$ est l'espacement minimum entre les voies de corrélation avance, retard et ponctuelle du test d'exclusion des défauts appliqué sur les signaux satellites individuels, permettant d'assurer les risques de non-intégrité et non continuité requis pour le contrôle d'intégrité et pour la durée d'intégration du traitement
   Ns représente l'ensemble des satellites sélectionnés
   (i,j) est un couple d'indice i et j parmi ces satellites
   Azi est l'angle d'incidence en azimut (par rapport au nord) du signal satellite i
   Eli est l'angle d'incidence en élévation (par rapport au plan horizontal) du signal satellite i

   (e) Une étape E5 (105), appliquée sur chacun desdits signaux GNSS reçus et chacune desdites positions de référence, de calcul du niveau efficace de la voie, dite de corrélation ponctuelle, obtenue après filtrage adapté du signal par le code local attendus pour la phase de code, dite prédite, compensée des biais communs résiduels de retard de groupe du récepteur et de synchronisation sur le temps GNSS, après intégration cohérente et non cohérente
   (f) Une étape E6 (106), appliquée sur chacun desdits signaux GNSS reçus et chacune desdites positions de référence, de calcul du niveau efficace des voies, dites de corrélation avance et de corrélation retard, obtenues après filtrage adapté du signal par des codes locaux attendus décalés d'une dite fraction de chip de code en avance et en retard par rapport à la phase de code dite prédite de la voie ponctuelle, après intégration cohérente et non cohérente, la dite fraction de chip de code étant déterminée de sorte à respecter la contrainte de probabilité de non-détection d'un biais de phase de code du signal dans un rayon de protection fixé par les objectifs de risque de perte d'intégrité associé au procédé de contrôle
   (g) Une étape E7 (107) de sélection préalable des signaux satellites aptes à participer au test de contrôle de l'intégrité de la position, sur un critère de niveau minimum de rapport signal à bruit de la voie dite ponctuelle, tel que calculé en étape (E3), permettant d'assurer l'efficacité du test selon les objectifs de probabilités de non-détection et de probabilité de fausse alarmes fixées pour le contrôle de l'intégrité

(h) Une étape E8 (108) de contrôle de l'intégrité de la position réalisant la protection contre l'occurrence de défauts des signaux sélectionnés pour un rayon de protection de l'erreur de position $RP_k$ égal ou éventuellement multiple du rayon de protection minimum $RP_0$, par exclusion des satellites dont les phases de codes ne sont pas compatibles avec les phases de codes prédites pour les dites positions de références testées ou qui présentent des biais de retard inattendus par rapport aux phases de codes prédites dues à des perturbations de propagation ou de synchronisation des signaux, la méthode d'exclusion des satellites, dite du Maximum Au Centre (MAC), étant **caractérisée par** l'absence d'un maximum au centre d'un triplet ($T_k$) de 3 points de corrélation, avance-ponctuel-retard, centrés sur la phase de code prédite pour la position de référence et espacés d'un écart de retard ($\tau_k$), multiple de la valeur ($\tau_0$) de l'offset minimum de temps de retard des voies avance et retard de la barrière de détection

(i) Une étape E9 (109) de calcul, pour chacune desdites positions de référence, du niveau efficace de puissance obtenu, dite vraisemblance, par cumul des puissances élémentaires des différents satellites sélectionnés, après intégration cohérente et non cohérente

(j) Une étape E10 (110) de détermination de la position de référence la plus proche de la position réelle de réception par identification de la position de référence qui présente la vraisemblance la plus élevée, dans un rayon de protection compatible des contraintes de probabilité de fausse alarme et de non-détection fixées au procédé de contrôle de l'intégrité de la position

2. Procédé de contrôle de l'intégrité de l'information de positionnement selon la revendication 1, **caractérisé en ce qu'**il comporte une étape (E11) d'autodétermination de non-disponibilité du contrôle vis-à-vis de la position de référence testée, si aucun satellite n'est sélectionné à l'issue des étapes (E7) et (E8), la position de référence testée étant alors retirée de l'ensemble des positions possibles candidates.

3. Procédé de contrôle de l'intégrité de l'information de positionnement selon la revendication 1, **caractérisé en ce qu'**il comporte une étape (E12) de calcul du niveau de bruit de référence, dit référence de bruit seul, utilisé pour le calcul du rapport signal à bruit après filtrage adapté (étape E3), **caractérisé en ce que** ladite référence de bruit seul est estimée, en retenant le niveau minimum de l'ensemble des sorties de filtrage adapté des signaux pour un retard de phase de code excédant largement le support de corrélation d'un chip de code, par exemple une demi-période de code dans le cas de codes périodiques (soit 0,5ms dans le cas GPS C/A), par estimation de la variance de cette sortie.

4. Procédé de contrôle de l'intégrité de l'information de positionnement selon la revendication 1, **caractérisé en ce qu'**il comporte une étape (E13) dite d'estimation des biais communs résiduels de retard de groupe du récepteur et de synchronisation sur le temps GNSS, après intégration cohérente et non cohérente, ladite estimation étant **caractérisée en ce qu'**elle permet :

(a) Lors de la phase de lancement du procédé au démarrage et en statique, de réaliser une première estimation du maximum de vraisemblance en position par rapport à une grille de positions possibles

(b) De réaliser l'estimation des biais résiduels de retard de code des satellites uniquement pour la position du premier maximum de vraisemblance, correspondant à la position la plus efficace pour observer les résidus de retard géométrique

(c) Pour cette estimation des biais résiduels de retard de code, appliquer une méthode de déconvolution des trajets multiple à plusieurs points de corrélation (par exemple, mais pas exclusivement, une méthode de type double-delta à 5 points qui couvre une grande partie du domaine de corrélation du code, adaptée pour les cas de réflexions spéculaires)

(d) Calculer la variance de la distribution desdits biais résiduels au temps courant (t) sur l'ensemble des satellites reçus pour la position dudit premier maximum de vraisemblance

(e) Calculer le biais résiduel moyen (correspondant au biais commun multi satellites, estimé pour la position du premier maximum de vraisemblance), et appliquer cette correction pour la prédiction de toutes les phases de code

(f) Appliquer la correction de ce biais commun pour recalculer les phases de codes des signaux attendus

(g) Réaliser une deuxième estimation du maximum de vraisemblance en position sur la grille de positions possibles en utilisant les phases de codes corrigées

(h) Calculer la moyenne et la variance de la distribution desdits biais résiduels corrigés, toujours pour le même temps courant (t)

(i) Tester la diminution de la valeur de la variance pour valider ou non la nouvelle position et la nouvelle valeur de biais commun

(j) Passer au temps suivant et reboucler le procédé le calcul du biais commun

**5.** Méthode de détermination conjointe du rayon de protection minimum et de la durée d'intégration du traitement, selon l'étape E4 de la revendication 1, tous deux adaptés au risque de non-intégrité et de non-continuité du procédé de contrôle, **caractérisée en ce que** :

(a) La Pnd attendue du monitoring par satellite est dérivée du risque de perte d'intégrité fixé au niveau de l'équipement

(b) Le contraste de corrélation objectif par satellite, défini par le produit $SNR_k \cdot \sqrt{\frac{T_{NC}}{T_c}} \left(1 - \frac{\Gamma_{Ck}(\tau_0)}{\Gamma_{Ck}(0)}\right)$ est déduite analytiquement de la valeur de Pnd attendue

(c) La Pfa attendue du monitoring par satellite est dérivée du risque de perte de continuité fixé au niveau de l'équipement

(d) La durée d'intégration cohérente et non cohérente est déterminée à partir du TTA fixé au niveau de l'équipement

(e) Le seuil de rapport signal à bruit minimum correspondant à la durée d'intégration cohérente et non cohérente est calculé à partir d'une valeur nominale du CN0 minimum garanti des signaux GNSS en réception

(f) Le retard minimum entre la voie ponctuelle et les voies avance et retard, définissant le rayon de protection du contrôle de l'intégrité est déduit du contraste de corrélation objectif, du seuil sur le rapport signal à bruit minimum calculé et de la largeur de chip du code PRN du signal

(g) La Pfa objective du contrôle de l'intégrité est déduite analytiquement à partir du contraste de corrélation objectif

(h) Si la Pfa objective est inférieure à la Pfa attendue, le retard entre voies avance-ponctuel-retard définit le rayon de protection du contrôle de l'intégrité

(i) Le rayon de protection minimum en position est calculé sous l'hypothèse que au moins 3 satellites sont visibles simultanément, et que tous sont sélectionnés par la barrière de détection du MAC.

(j) Si le rayon de protection minimum est supérieur au rayon d'alarme limite toléré pour le service de positionnement, le contrôle de l'intégrité du système de positionnement est déclaré irréalisable pour les objectifs de Pnd et Pfa attendus

(k) Si le rayon de protection minimum est inférieur d'un rapport k au rayon d'alarme limite toléré pour le service de positionnement, le contrôle de l'intégrité du système de positionnement est déclaré réalisable pour les objectifs de Pnd et Pfa attendus, et la valeur ($\tau_0$) de l'offset de temps de retard des voies avance et retard de la barrière de détection du MAC peut être relaxée d'un coefficient k conformément à l'étape 8 de la revendication 1

(l) Si la Pfa objective est supérieure à la Pfa attendue,

i) la durée d'intégration cohérente en sortie de filtrage adapté est progressivement augmentée jusqu'à une durée égale au TTA, de sorte à optimiser le rapport signal à bruit de sortie après filtrage adapté

$$SNR_k \cdot \sqrt{\frac{T_{NC}}{T_c}}|$$

ii) Les Pfa et Pnd objectives sont recalculées avec le nouveau rapport signal à bruit de sortie, sans modification du rayon de protection du contrôle de l'intégrité, selon les formulations analytiques définies par l'invention

iii) Si la Pfa objective recalculée reste supérieure à la Pfa attendue, le contrôle de l'intégrité du système de positionnement est déclaré irréalisable pour les objectifs de Pnd et Pfa attendus

**6.** Dispositif de contrôle de l'intégrité de l'information de positionnement selon les revendications précédentes dans lequel ledit dispositif est configuré pour mettre en oeuvre le procédé de contrôle de l'intégrité selon les revendications 1 à 5.

**7.** Produit de programme informatique comprenant des instructions lisibles par ordinateur qui, lorsqu'elles sont exécutées sur un processeur, amènent le processeur à exécuter un procédé selon les revendications 1 à 5.

# [Fig.1]

E1: Synchronisation de la base de temps locale — 101

E2: Calcul des phases de codes prédites — 102

E3: Calcul du rapport signal à bruit dans la bande — 103

E4: Détermination du rayon de protection pour les risques de non intégrité et non continuité requis — 104

E5: Calcul du niveau efficace de la voie ponctuelle après filtrage adapté compensé du biais commun — 105

E6: Calcul du niveau efficace des voies avance et retard après filtrages adaptés compensés du biais commun — 106

E7: Sélection préliminaire des satellites sur rapport signal à bruit minimum — 107

E8: Exclusion des satellites par MAC — 108

E9: Calcul de la vraisemblance des position par corrélation multi-satellite — 109

E10: Détermination de la position de référence la plus proche par maximisation de la vraisemblance — 110

[Fig.2]

# [Fig.3]

[Fig.4]

[Fig.5]

## [Fig.6]

[Fig.7]

701

Calcul des phases de code (Pd)
des signaux satellites visibles pour
l'ensemble des positions Bei
attendues

702

Génération des signaux GNSS
attendus Ci(t), calés sur la phase
de code prédite corrigée du biais
commun à l'instant courant et
pour l'ensemble des positions
attendues Bei

711

Correction du biais commun
de retard

$\{C_i(t)\}_{Be}$

712

Temps système
courant (t)

703

Corrélation multi-satellites
pour l'ensemble des
positions Bei attendues

713

Signal GNSS reçu au
temps courant

$SIS_{GNSS}(t)$

$\{\Gamma_{sci}(0,t)\}_{Be}$

705

Estimation du rapport signal
à bruit

704

Référence de bruit seul

$\{SnR_i\}_{Be}$

706

Sélection des signaux
satellites selon un critère de
SNR minimum

Seuil SNR min

$\{\Gamma'_{sci}(0,t)\}_{Be}$

708

Sélection des signaux
satellites valides selon le
critère MAC (EPL)

Pnd          Pfa

707

Ajustement du rayon de
protection MAC

Ecart de retard

$\{\Gamma''_{sci}(0,t)\}_{Be}$

709

Détection du maximum de
puissance sur les positions
attendues (Be$_{max}$)

710

Estimation du biais commun
de temps

# [Fig.8]

| | |
|---|---|
| Estimation du premier maximum de vraisemblance (1_MV) — 801 | Contrôle de l'intégrité et exclusion des axes satellites biaisés — 808 |
| Estimation des biais résiduels de retards du (1_MV) — 802 | Estimation des biais résiduels de retards corrigés du (2_MV) — 809 |
| Déconvolution trajets multiples — 803 | Calcul moyenne des biais résiduels corrigés (M1_MV) — 810 |
| Calcul moyenne des biais résiduels (M1_MV) — 804 | Calcul variances des biais résiduels corrigés (V2_MV) — 811 |
| Calcul variances des biais résiduels (V1_MV) — 805 | Test variance des biais résiduels — 812 |
| Correction des phases de codes attendues — 806 | V1_MV< V2_MV          V1_MV> V2_MV |
| Estimation du second maximum de vraisemblance (2_MV) — 807 | Maintien position 1_MV et biais moyen M1_MV — 813      Actualisation position 2_MV et biais moyen M2_MV — 814 |

t => t+1

EP 4 307 010 A1

[Fig.9]

$$\Gamma_S(S_k, Bl) = \int_{Tint} SIS(t, Bei).C_k^i(t + \tau_{Bl})dt$$

$$\Gamma_N(S_k, Bl) = \int_{Tint} SIS(t, Bei).C_k^i\left(t - \frac{Tc}{2} + \tau_{Bl}\right)dt$$

41

[Fig.10]

Base de données des
positions des balises
virtuelles ──── 1001

─ 1002
Récepteur GNSS

─ 1003
Moteur de corrélation

─ 1004
Calculateur

**Récepteur GNSS**

| Calcul PVS |

| Calcul PVT |

| Modèles de correction |

| Contrôle intégrité PVT |

| Calibration biais de temps récepteur |

| Base de temps externe |
─ 1005

**Moteur de corrélation**

| Calcul distances géométriques |

| Calcul corrections modèles |

| Prédiction phases de codes |

| Correction biais commun de temps |

| Corrélation avec codes attendus |

| Calcul rapport signal à bruit |

| Rayon de protection |

| Contrôle d'intégrité MAC |

| Exclusion satellites |

Cœur de corrélation

**Calculateur**

| Calcul vraisemblances multi-satellites |

| Recherche maximum de vraisemblance |

| Extraction résidus de retard par Double Delta |

| Test variance résidus minimale |

| Estimation biais commun de temps |

Détermination position

Europäisches Patentamt

European Patent Office

Office européen des brevets

# RAPPORT DE RECHERCHE EUROPEENNE

Numéro de la demande

**EP 23 18 5105**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 3 751 315 A1 (THALES SA [FR]) 16 décembre 2020 (2020-12-16) * figures 4,6 * * alinéa [0015] * * alinéa [0072] * * alinéa [0078] – alinéa [0080] * * alinéa [0088] * ----- | 1-7 | INV. G01S19/20 G01S19/42 G01S19/50 |
| A | "31st AIAA International Communications Satellite Systems Conference", , 14 juillet 2013 (2013-07-14), XP093037600, DOI: 10.2514/6.2013-5613 Extrait de l'Internet: URL:http://spcomnav.uab.es/docs/conferences/Parro_AIAA_2013_Signal-Level_Integrity_Monitoring_Metric_for_Robust_GNSS_receivers.pdf * le document en entier * ----- | 1-7 | |
| A | US 9 166 649 B2 (THALES SA [FR]) 20 octobre 2015 (2015-10-20) * le document en entier * ----- | 1-7 | DOMAINES TECHNIQUES RECHERCHES (IPC) G01S |

Le présent rapport a été établi pour toutes les revendications

| Lieu de la recherche | Date d'achèvement de la recherche | Examinateur |
|---|---|---|
| Munich | 2 novembre 2023 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 23 18 5105

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

02-11-2023

| Document brevet cité au rapport de recherche | | Date de publication | Membre(s) de la famille de brevet(s) | | Date de publication |
|---|---|---|---|---|---|
| EP 3751315 | A1 | 16-12-2020 | CA | 3083378 A1 | 13-12-2020 |
| | | | CN | 112083458 A | 15-12-2020 |
| | | | EP | 3751315 A1 | 16-12-2020 |
| | | | US | 2022135096 A1 | 05-05-2022 |
| | | | WO | 2020249874 A1 | 17-12-2020 |
| US 9166649 | B2 | 20-10-2015 | EP | 2869085 A1 | 06-05-2015 |
| | | | FR | 3012620 A1 | 01-05-2015 |
| | | | US | 2015117500 A1 | 30-04-2015 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3306272 A1
- FR 1601449

- EP 3751315 A